# EUROPEAN PATENT APPLICATION

(11) **EP 4 525 560 A1**
(43) Date of publication of application: **19.03.2025**
(21) Application number: 23803509.1
(22) Date of filing: 01.05.2023
(51) Int. Cl.: H05H 3/02, H05B 6/26, H01S 1/06

(54) **ATOM BEAM GENERATION DEVICE, PHYSICS PACKAGE, PHYSICS PACKAGE FOR OPTICAL LATTICE CLOCK, PHYSICS PACKAGE FOR ATOMIC CLOCK, PHYSICS PACKAGE FOR ATOMIC INTERFEREROMETER, PHYSICS PACKAGE FOR QUANTUM INFORMATION PROCESSING DEVICE, AND PHYSICS PACKAGE SYSTEM**

(30) Priority: 12.05.2022 JP 2022078839
(71) Applicant: RIKEN, Wako-shi, Saitama 351-0198 (JP); JEOL Ltd., Akishima-shi, Tokyo 196-8558 (JP)
(72) Inventor: KATORI Hidetoshi, Wako-shi, Saitama 351-0198 (JP); TAKAMOTO Masao, Wako-shi, Saitama 351-0198 (JP); TSUJI Shigenori, Akishima-shi, Tokyo 196-8558 (JP)
(74) Representative: Boult Wade Tennant LLP
(86) International application number: PCT/JP2023/017053
(87) International publication number: WO 2023/219032

(57) **Abstract**

A sample reservoir (104) containing a sample (118), a nozzle (106), and a heated element (108) are arranged in a vacuum chamber (102). An induction coil (114) is located on the outside of the vacuum chamber (102). The heated element (108) is located around the sample reservoir (104) and the nozzle (106). Electromagnetic power is wirelessly transferred from the induction coil (114) to the heated element (108), whereby the heated element (108) is heated. Heating of the heated element (108) causes the sample reservoir (104) and the nozzle (106) to be heated, whereby the sample (118) in the sample reservoir (104) is heated. An atomic beam generated by the heating of the sample (118) is emitted from the nozzle (106).

## Description

### TECHNICAL FIELD

The present invention relates to an atomic beam generator, a physics package, a physics package for an optical lattice clock, a physics package for an atomic clock, a physics package for an atomic interferometer, a physics package for a quantum information processing device, and a physics package system.

### BACKGROUND

An optical lattice clock is an atomic clock proposed in the year 2001 by Hidetoshi Katori, one of the inventors of the present application. In an optical lattice clock, atoms are confined in an optical lattice formed with laser light, and a resonance frequency in the visible light range is measured. Accordingly, an optical lattice clock can achieve measurement with a precision of 18 digits, which far exceeds the precision of currently-available cesium clocks. Optical lattice clocks are now a subject of intensive research and development not only by the present inventors' group but also by various other groups in Japan and overseas, and are being developed into next-generation atomic clocks.

Recent optical lattice clock technologies can be found, for example, in Patent Documents 1 to 3 listed below. Patent Document 1 describes forming a one-dimensional moving optical lattice inside an optical waveguide having a hollow passageway. Patent Document 2 describes a configuration for setting an effective magic frequency. In fact, a magic wavelength is theoretically and experimentally determined for each of strontium, ytterbium, mercury, cadmium, magnesium, and the like. Further, Patent Document 3 describes a radiation shield which reduces the effects of blackbody radiation emitted from surrounding walls.

In an optical lattice clock, since time measurement is performed with high precision, an altitude difference of 1 cm on Earth based on a general relativistic effect of gravity can be detected as a deviation in progression of time. Thus, if optical lattice clocks can be made smaller and portable so as to be usable in fields outside laboratories, possibilities for application would extend to new geodetic technologies in uses such as search for underground resources and detection of underground cavities and magma chambers. By mass-producing optical lattice clocks and deploying them in various locations to continuously monitor time variations of a gravitational potential, applications in detection of crustal movement, space mapping of a gravitational field, and the like would also become possible. In this way, optical lattice clocks are expected to contribute to society as a new fundamental technology beyond the scope of high-precision time measurement.

A typical physics package of an atomic clock such as an optical lattice clock comprises an atomic beam oven provided inside an ultra-high vacuum chamber. The atomic beam oven heats a sample (in solid or liquid form) which serves as an atom source, and ejects atoms evaporated by the heating to a subsequent device . For example, an atomic beam ejected from the atomic beam oven is output to a magneto-optical trap device (MOT device) via a Zeeman slower.

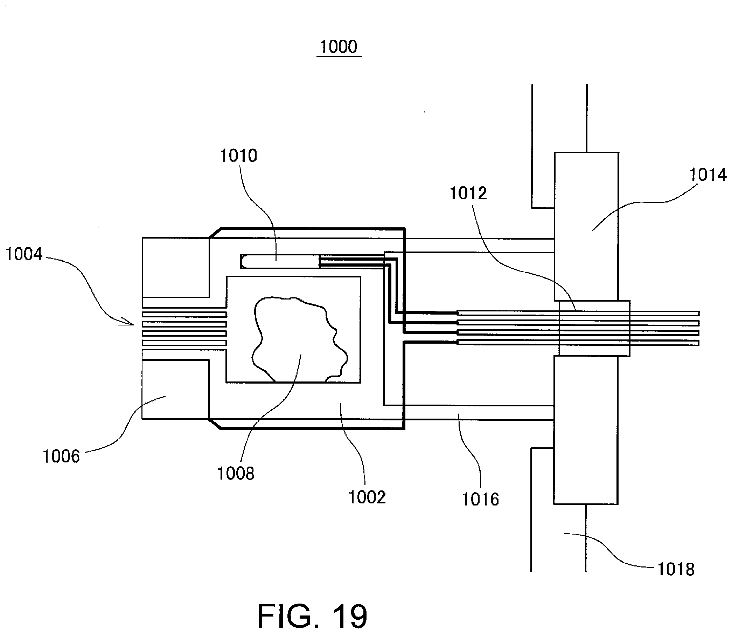

An atomic beam oven according to conventional technology will now be described by reference to FIG. 19. FIG. 19 shows an atomic beam oven according to conventional technology.

The atomic beam oven 1000 includes a sample reservoir 1002, a nozzle 1004, and a heater 1006. A sample 1008, which is an atom source, is contained in the sample reservoir 1002. The sample 1008 is heated by the heater 1006, and atomic vapor is thereby generated. The atomic vapor is ejected as a focused atomic beam.

A temperature sensor 1010 is installed on the sample reservoir 1002 and measures the temperature of the sample reservoir 1002. Electrical wiring of the heater 1006 and the temperature sensor 1010 is routed to the outside of the atomic beam oven 1000 via a terminal 1012.

The atomic beam oven 1000 further includes a flange 1014. The flange 1014 is mechanically coupled to a flange 1018 provided on the body of a physics package. With this structure, the atomic beam oven 1000 and the physics package are hermetically sealed together.

The sample reservoir 1002 serves the function of mechanically fixing the nozzle 1004, the heater 1006, the sample 1008, the temperature sensor 1010, and the terminal 1012 to the flange 1014.

Since the flange 1014 needs to be maintained at room temperature, a thermal insulation member 1016 that blocks heat transfer from the heater 1006 is provided between the flange 1014 and the heater 1006, which is heated to a high temperature.

### CITATION LIST

### PATENT LITERATURE

Patent Document 1: JP 6206973 B
Patent Document 2: JP 2018-510494 A
Patent Document 3: JP 2019-129166 A

### SUMMARY

### TECHNICAL PROBLEM

A discussion will now be given regarding size and weight reduction of the atomic beam oven and of its flange on the vacuum chamber of the physics package.

The lower limits of the respective sizes of the nozzle 1004, the heater 1006, and the sample 1008 are uniquely determined once the service life of the device is set. Based on the life of the device, the weight and volume of the sample 1008, which must continue to supply atomic beam during that period, are calculated. Once the volume of the sample 1008 is determined, thermal power which the heater 1006 must supply is calculated based on the sublimation temperature and the weight of the sample 1008. Further, the size of the nozzle 1004 is determined based on the atomic beam diameter and atomic flux required in a subsequent cooling stage of the atomic beam oven 1000. For example, in a case where the sample 1008 is strontium and the shape of the sample 1008 is a cylindrical shape, assuming that the life of the sample is set to 50 years, the atomic flux to 10¹² atoms/cm²/s, and the atomic beam diameter to 10 mm, the diameter of the sample 1008 would be equal to 10 mm, and the length would be equal to 10 mm.

Next, size and weight reduction will be discussed focusing on the sample reservoir 1002, the temperature sensor 1010, the terminal 1012, and the flange 1014.

When, as according to conventional technology, electric current is to be supplied to the heater 1006 via wires and Joule heat is used to heat the sample 1008, it is necessary to supply electric current to the heater 1006. In such cases, at least two pins are required in the hermetically sealed terminal 1012. In other words, difficulty is encountered in omitting the terminal 1012.

As the temperature sensor, it is possible to employ a temperature sensor that uses electrical resistance of the heater 1006 itself. For example, resistance of standard metals vary linearly with temperature at temperatures near room temperature. Therefore, it is possible in principle to obtain the temperature by measuring a voltage between wires in the heater 1006.

In order to obtain a sufficient thermal insulation, a material having low thermal conductivity must be used for the thermal insulation member 1016. Furthermore, it is necessary to use a thermal insulation member 1016 having a small cross-sectional area and a minimum required length. However, if the cross-sectional area is made too small, it becomes difficult to ensure sufficient strength of the thermal insulation member 1016.

The size of the flange 1014 must inevitably be greater than the size of the sample reservoir 1002. For example, in a case where a widely-used ConFlat flange is to be employed, when the diameter of the sample reservoir 1002 is 10 mm, a flange having an inner diameter of 16 mm, an outer diameter of 34 mm, and a thickness of 7.5 mm is used.

From the above, it can be seen that there are two types of elements of the atomic beam oven 1000 : those whose size is uniquely determined according to the service life of the device, and those whose size does not depend on the service life but increases depending on the heating mechanism. Explaining by referring, as an example, to the atomic beam oven 1000 in which electric current is supplied to the heater 1006 via wires and Joule heat is used to heat the sample 1008, the size of the atomic beam oven 1000 increases due to the sizes of the terminal 1012, the sample reservoir 1002, and the flange 1014, which are difficult to omit.

Furthermore, in an atomic beam oven installed in ultra-high vacuum, vacuum performance is expected to be improved not only by reducing the size of each element but also by reducing the number of elements or by reducing the surface area of each structure. This is because the amount of gas released from a component in ultra-high vacuum is proportional to the product of the outgassing rate from the component material and the surface area of the component.

In cases where heating is performed by supplying electric current to the heater, even when the resistor of the heater is encapsulated by molding in a material such as ceramic or glass, lead wires of a finite length are required. Accordingly, it is considered that outgassing from the lead wires, which have a relatively large surface area and which are heated to a high temperature, cannot be ignored.

In addition, it is considered that outgassing from components such as the terminal and the thermal insulation member cannot be ignored.

The present invention is directed to achieving size reduction of an atomic beam generator.

### SOLUTION TO PROBLEM

According to one aspect of the present invention, there is provided an atomic beam generator including: a vacuum chamber; a wireless power transfer means installed outside the vacuum chamber and configured to transfer electroferromagnetic power wirelessly; a sample reservoir installed inside the vacuum chamber and configured to contain an atom source; a heated element installed inside the vacuum chamber and configured to be heated by electroferromagnetic power received from the wireless power transfer means so as to heat the atom source; and a nozzle installed on the sample reservoir and configured to eject from the sample reservoir an atomic beam generated by heating the atom source.

The heated element may be a ferromagnetic material, and the wireless power transfer means may. wirelessly transfer electromagnetic power to the heated element by utilizing hysteresis loss.

The heated element may be a ferromagnetic material having a Curie temperature specified based on a target sublimation temperature target sublimation temperature of the atom source.

The heated element may be a high-frequency resistor, and the wireless power transfer means may wirelessly transfer electromagnetic power to the heated element by utilizing eddy-current loss..

The heated element may be a resistor included in an LC resonator, and the wireless power transfer means may. wirelessly transfer electromagnetic power to the heated element by utilizing two coils with inductive coupling.

The atomic beam generator may further include a thermal insulation member that interrupt the heat transfer path from the sample reservoir.

The thermal insulation member may have a cylindrical shape and be provided on the sample reservoir on a side toward the nozzle, and the atomic beam ejected from the nozzle may travel by passing through the thermal insulation member.

The sample reservoir and the thermal insulation member may be formed into one unit and inserted into the vacuum chamber to be installed therein.

The atomic beam generator may include a plurality of thermal insulation members. Each thermal insulation member may be a rod-shaped member, and the thermal insulation members may be installed to surround the sample reservoir while being spaced apart from each other.

The wireless power transfer means may be an induction coil.

The heated element may be installed to surround the nozzle.

The heated element may be a photothermal converter, and the wireless power transfer means may radiate light toward the heated element.

The heated element may be installed at an end face of the sample reservoir opposite to the end face at which the nozzle is installed, and the size of the sample reservoir may be greater than the diameter of light radiated onto the heated element.

According to one aspect of the present invention, there is provided a physics package including the above-described atomic beam generator and a vacuum chamber that encloses a clock transition space where atoms are placed.

According to one aspect of the present invention, there is provided a physics package for an optical lattice clock, which includes the above-noted physics package.

According to one aspect of the present invention, there is provided a physics package for an atomic clock, which includes the above-noted physics package.

According to one aspect of the present invention, there is provided a physics package for an atomic interferometer, which includes the above-noted physics package.

According to one aspect of the present invention, there is provided a physics package for a quantum information processing device based on atoms or ionized atoms, which includes the above-noted physics package.

According to one aspect of the present invention, there is provided a physics package system including the above-noted physics package and a controller configured to control operation of the physics package.

### ADVANTAGEOUS EFFECTS OF INVENTION

According to the present invention, it is possible to achieve size reduction of an atomic beam generator.

### BRIEF DESCRIPTION OF DRAWINGS

FIG. 1 is a block diagram showing an overall configuration of an optical lattice clock according to an embodiment.
FIG. 2 is a diagram schematically illustrating a configuration of an atomic beam generator according to a first embodiment.
FIG. 3 is a diagram schematically illustrating a configuration of an atomic beam generator according to a second embodiment.
FIG. 4 is a diagram schematically illustrating a configuration of an atomic beam generator according to a third embodiment.
FIG. 5A is a diagram showing an example of wireless power transfer.
FIG. 5B is a diagram showing an example of wireless power transfer.
FIG. 5C is a diagram showing an example of wireless power transfer.
FIG. 5D is a diagram showing an example of wireless power transfer.
FIG. 5E is a diagram showing an example of wireless power transfer.
FIG. 6A is a perspective view showing a configuration of a specific example of the first embodiment.
FIG. 6B is a perspective view showing a configuration of the specific example of the first embodiment.
FIG. 6C is a perspective view showing a configuration of the specific example of the first embodiment.
FIG. 6D is a perspective view showing a configuration of the specific example of the first embodiment.
FIG. 7 is a diagram showing an exterior view of a physics package according to the first embodiment.
FIG. 8 is a cross-sectional view showing the physics package according to the first embodiment.
FIG. 9A is a perspective view showing a configuration of a specific example of the second embodiment.
FIG. 9B is a perspective view showing a configuration of the specific example of the second embodiment.
FIG. 10 is a cross-sectional view showing a physics package according to the second embodiment.
FIG. 11 is a diagram showing an exterior view of a physics package according to the third embodiment.
FIG. 12 is a cross-sectional view showing a configuration of a specific example of the third embodiment.
FIG. 13A is a diagram showing a configuration of the specific example of the third embodiment.
FIG. 13B is a diagram showing a configuration of the specific example of the third embodiment.
FIG. 14 is a graph showing changes in temperature over time.
FIG. 15A is a perspective view showing a configuration of an atomic beam generator according to a fourth embodiment.
FIG. 15B is a perspective view showing a configuration of the atomic beam generator according to the fourth embodiment.
FIG. 15C is a perspective view showing a thermal insulation member and a heated element according to the fourth embodiment.
FIG. 15D is a perspective view showing the thermal insulation member and the heated element according to the fourth embodiment.
FIG. 15E is a cross-sectional view showing a configuration of the atomic beam generator according to the fourth embodiment.
FIG. 16A is a perspective view showing a configuration of an atomic beam generator according to a fifth embodiment.
FIG. 16B is a perspective view showing a configuration of the atomic beam generator according to the fifth embodiment.
FIG. 16C is a perspective view showing a thermal insulation member and a heated element according to the fifth embodiment.
FIG. 16D is a perspective view showing the thermal insulation member and the heated element according to the fifth embodiment.
FIG. 16E is a cross-sectional view showing a configuration of an atomic beam generator according to the fifth embodiment.
FIG. 17A is a perspective view showing a configuration of an atomic beam generator according to a sixth embodiment.
FIG. 17B is a perspective view showing a configuration of the atomic beam generator according to the sixth embodiment.
FIG. 17C is a perspective view showing a thermal insulation member and a heated element according to the sixth embodiment.
FIG. 17D is a perspective view showing the thermal insulation member and the heated element according to the sixth embodiment.
FIG. 17E is a cross-sectional view showing a configuration of the atomic beam generator according to the sixth embodiment.
FIG. 18 is a cross-sectional view showing a configuration of an atomic beam generator according to a seventh embodiment.
FIG. 19 is a diagram schematically illustrating a configuration of an atomic beam oven according to conventional technology.

### DESCRIPTION OF EMBODIMENTS

### <Configuration of Optical Lattice Clock>

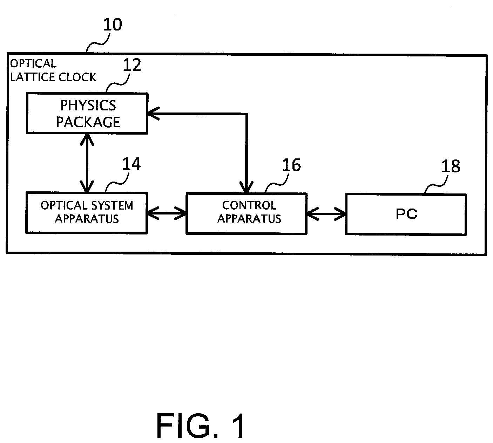

A general configuration of an optical lattice clock 10 in which an atomic beam generator according to an embodiment is used will now be described by reference to FIG. 1. FIG. 1 is a block diagram showing an overall configuration of the optical lattice clock 10. Here, while a description will be given by referring to the optical lattice clock 10 as an example apparatus in which an atomic beam generator is used, an atomic beam generator according to an embodiment may naturally be used in apparatuses other than the optical lattice clock 10.

The optical lattice clock 10 includes, for example, a physics package 12, an optical system apparatus 14, a control apparatus 16, and a PC (personal computer) 18.

The physics package 12 is an apparatus that traps atoms, confines the atoms in an optical lattice, and causes clock transitions. The optical system apparatus 14 is an apparatus equipped with optical devices such as a laser light source for trapping atoms, a laser light source for exciting clock transitions, and a laser frequency control device. In addition to sending laser light to the physics package 12, the optical system apparatus 14 performs, among others, a processing of receiving fluorescence signals emitted by the atoms in the physics package 12, converting the received signals into electrical signals, and providing the electrical signals as feedback to the laser light source in order to achieve a match with the resonance frequency of the atoms. The control apparatus 16 is an apparatus that controls the physics package 12 and the optical system apparatus 14. For example, the control apparatus 16 performs operation control of the physics package 12, operation control of the optical system apparatus 14, and analysis processing such as frequency analysis of clock transitions obtained by measurement. The physics package 12, the optical system apparatus 14, and the control apparatus 16 work in mutual cooperation to implement the functions of the optical lattice clock 10.

The PC 18 is a general-purpose computer including a processor and a memory. The functions of the PC 18 are implemented by having software executed by hardware including the processor and the memory. In the PC 18, an application program for controlling the optical lattice clock 10 is installed. The PC 18 is connected to the control apparatus 16, and may control not only the control apparatus 16 but rather the entire optical lattice clock 10 including the physics package 12 and the optical system apparatus 14. The PC 18 also provides a UI (user interface) for the optical lattice clock 10. A user can start the optical lattice clock 10, measure time, check results, and so on via the PC 18.

A system including the physics package 12 and a structure required for controlling the physics package 12 may be referred to as a "physics package system". The structure required for the control may be included in the control apparatus 16 or the PC 18, or may be included in the physics package 12. Further, a part or all of the functions of the control apparatus 16 may be included in the physics package 12.

Atomic beam generators according to embodiments will be described in detail below. In the atomic beam generators according to embodiments, a heated element is provided on or around a sample reservoir that contains a sample, which is an atom source. The sample reservoir is installed in a vacuum chamber. A wireless power transfer device (e.g., an induction coil) is installed outside the vacuum chamber, and energy (specifically, electroferromagnetic waves) is supplied from the wireless power transfer device to the heated element so as to heat the heated element. More specifically, by transferring electromagnetic power or light from the wireless power transfer device to the heated element, the heated element is heated. By heating the heated element, the sample is heated, and atomic vapor is thereby generated. The heated element is a ferromagnetic material, a high-frequency resistor, a resistor included in an LC resonator, a photothermal converter, or the like.

### <Atomic Beam Generator According to First Embodiment>

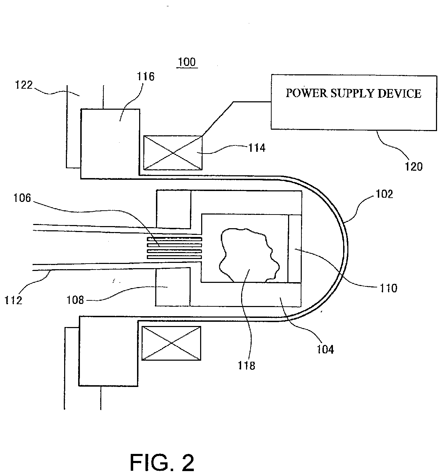

A configuration of an atomic beam generator according to a first embodiment will be described by reference to FIG. 2. FIG. 2 is a diagram schematically illustrating the configuration of an atomic beam generator 100 according to the first embodiment.

The atomic beam generator 100 includes a vacuum chamber 102, a sample reservoir 104, a nozzle 106, a heated element 108, a lid 110, a thermal insulation member 112, an induction coil 114, and a flange 116.

Inside the vacuum chamber 102, there are located the sample reservoir 104, the nozzle 106, the heated element 108, the lid 110, and the thermal insulation member 112. The space inside the vacuum chamber 102 is connected to a vacuum chamber of the physics package 12, and is maintained ultra-high vacuum conditions. Accordingly, the sample reservoir 104, the nozzle 106, the heated element 108, the lid 110, and the thermal insulation member 112 are installed in ultra-high vacuum. The sample reservoir 104, the nozzle 106, the heated element 108, and the lid 110 are mechanically supported, via the thermal insulation member 112, on a subsequent module installed in the vacuum chamber of the physics package 12.

The sample reservoir 104 contains a sample 118, which is an atom source. When the sample 118 is heated, the sample 118 is consequently sublimed into atomic vapor. As the atom source, for example, strontium, ytterbium, or the like is used.

The nozzle 106 has a cylindrical tube shape, and one end of the nozzle 106 is press-fitted into the sample reservoir 104. The nozzle 106 emits a well-collimated atomic beam from the sample reservoir 104.

The heated element 108 is provided on or around the sample reservoir 104. In the example shown in FIG. 2, the heated element 108 is installed to surround the side surface of the nozzle 106 while being in contact with the sample reservoir 104. Thus, the heated element 108 is in thermal contact with the sample reservoir 104 and the nozzle 106. When the heated element 108 is heated, the sample reservoir 104 and the nozzle 106 are consequently heated. In addition, the sample 118 contained in the sample reservoir 104 is heated.

The lid 110 is attached to the sample reservoir 104 at a location opposite to the nozzle 106. when the lid 110 is opened, an insertion opening is formed where the lid 110 has been attached. Through this insertion opening, the sample 118 is inserted into the sample reservoir 104.

The thermal insulation member 112 is a member that blocks heat transfer path from the sample reservoir 104. The thermal insulation member 112 is provided on the nozzle 106 side of the sample reservoir 104. The thermal insulation member 112 is arranged along the direction in which the nozzle 106 extends from the sample reservoir 104 (i.e., the direction in which the atomic beam travels). The thermal insulation member 112 may also serve as a member that guides the travel of the atomic beam.

For example, the thermal insulation member 112 has a cylindrical shape, and the atomic beam ejected from the nozzle 106 passes through the thermal insulation member 112 and travels toward a subsequent device (e.g., a Zeeman slower). In another example, a plurality of insulation members may be provided in a manner surrounding the nozzle 106 and the sample reservoir 104 while being spaced apart from each other.

The induction coil 114 is an example of a wireless power transfer means (or an example of a wireless power transfer means), and is installed on the outside (i.e., the atmosphere side) of the vacuum chamber 102 at a position corresponding to the heated element 108 inside the vacuum chamber 102. More specifically, the induction coil 114 is arranged on the outside of the vacuum chamber 102 in a manner surrounding the heated element 108. When the heated element 108 is arranged to surround the nozzle 106, the induction coil 114 is to be arranged to surround the nozzle 106.

When electric power is supplied to the induction coil 114 from a power supply device 120 including a control device, an AC ferromagnetic field is generated from the induction coil 114. The AC ferromagnetic field passes through and propagates into the vacuum chamber 102. When ferromagnetic power is transferred to the heated element 108 in this way, the heated element 108 is consequently heated. The heat generated from the heated element 108 is transferred to the sample reservoir 104, the nozzle 106, and the sample 118, so that the sample reservoir 104, the nozzle 106, and the sample 118 are heated. When the sample 118 is heated, atomic vapor is consequently generated and ejected as atomic beam from the nozzle 106 to the outside of the sample reservoir 104.

The flange 116 is provided on the vacuum chamber 102, and is mechanically coupled to a flange 122 provided on the physics package 12. With this structure, the atomic beam generator 100 and the physics package 12 are hermetically sealed together.

<Atomic Beam Generator According to Second Embodiment>

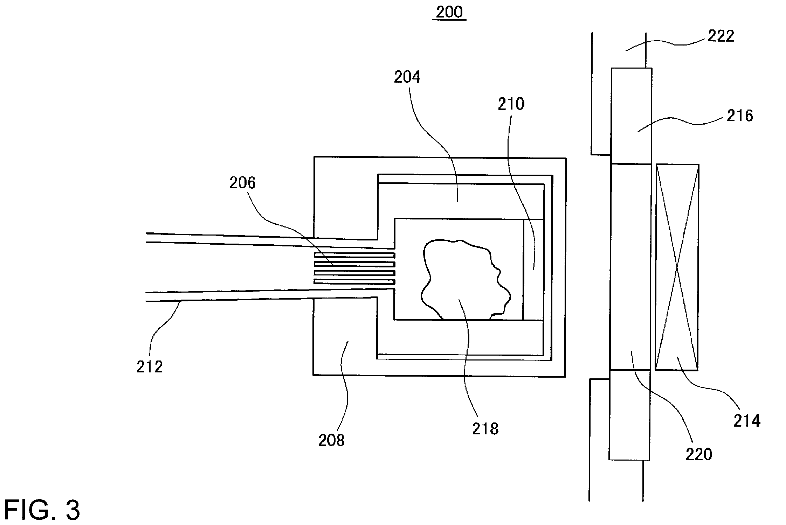

A configuration of an atomic beam generator according to a second embodiment will be described by reference to FIG. 3. FIG. 3 is a diagram schematically illustrating the configuration of the atomic beam generator 200 according to the second embodiment.

The atomic beam generator 200 includes a vacuum chamber (not shown in drawing), a sample reservoir 204, a nozzle 206, a heated element 208, a lid 210, a thermal insulation member 212, an induction coil 214, and a flange 216.

The respective structures of the vacuum chamber, the sample reservoir 204, the nozzle 206, the lid 210, and the thermal insulation member 212 are the same as the respective structures of the vacuum chamber 102, the sample reservoir 104, the nozzle 106, the lid 110, and the thermal insulation member 112 according to the first embodiment. The sample reservoir 204 contains a sample 218 serving as an atom source.

The heated element 208 is arranged to surround the side surface of the nozzle 206 and also surround the sample reservoir 204. Thus, the heated element 208 is in thermal contact with the sample reservoir 204 and the nozzle 206. When the heated element 208 is heated, the sample reservoir 204 and the nozzle 206 are consequently heated. In addition, the sample 218 contained in the sample reservoir 204 is heated.

The induction coil 214 is an example of a wireless power transfer means (or an example of a wireless power transfer means), and is installed on the outside (i.e., the atmosphere side) of the vacuum chamber. More specifically, the induction coil 214 is arranged at a position facing the surface of the sample reservoir 204 opposite to the surface at which the nozzle 206 is located (i.e., at a position facing the surface at which the lid 210 is located).

A window 220 is provided in the flange 216. The induction coil 214 is located at a position facing the sample reservoir 204 across this window 220.

The heated element 208 receives ferromagnetic energy from the induction coil 214 at its surface facing the induction coil 214, and is thereby heated. As in the first embodiment, the heat generated from the heated element 208 is transferred to the sample reservoir 204 and the nozzle 206, and the sample reservoir 204, the nozzle 206, and the sample 218 are heated.

The flange 216 is mechanically coupled to a flange 222 provided on the physics package 12. With this structure, the atomic beam generator 200 and the physics package 12 are hermetically sealed together.

### <Atomic Beam Generator According to Third Embodiment>

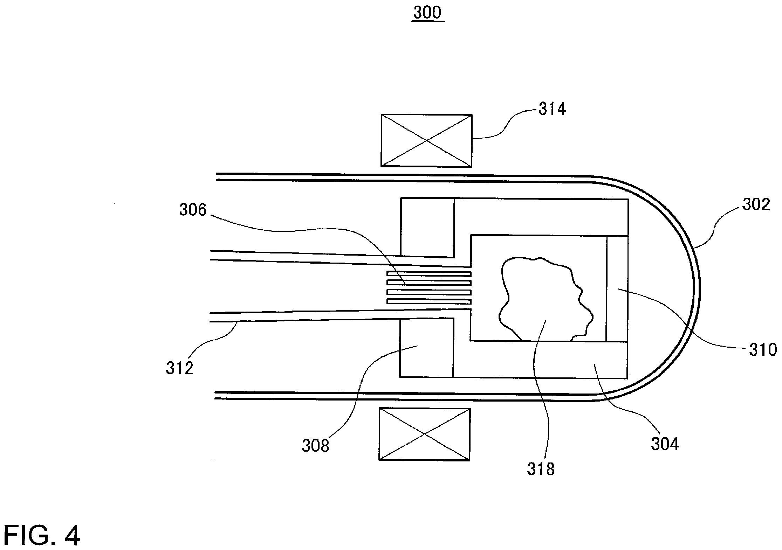

A configuration of an atomic beam generator according to a third embodiment will be described by reference to FIG. 4. FIG. 4 is a diagram schematically illustrating the configuration of the atomic beam generator 300 according to the third embodiment.

The atomic beam generator 300 includes a vacuum chamber 302, a sample reservoir 304, a nozzle 306, a heated element 308, a lid 310, a thermal insulation member 312, and an induction coil 314.

The respective structures of the sample reservoir 304, the nozzle 306, the heated element 308, the lid 310, and the thermal insulation member 312 are the same as the respective structures of the sample reservoir 104, the nozzle 106, the heated element 108, the lid 110, and the thermal insulation member 112 according to the first embodiment. The sample reservoir 304 contains a sample 318 serving as an atom source.

The induction coil 314 is an example of a wireless power transfer means (or an example of a wireless power transfer means), and, as in the first embodiment, is arranged outside the vacuum chamber 302 in a manner surrounding the heated element 308. As in the first embodiment, the heated element 308 receives ferromagnetic energy from the induction coil 314 and is thereby heated. As a result, the sample reservoir 304, the nozzle 306, and the sample 318 are heated.

The vacuum chamber 302 extends along the direction of extension of the thermal insulation member 312, and is fixed to the physics package 12. In the third embodiment, the atomic beam generator 300 is fixed to the physics package 12 without using a flange.

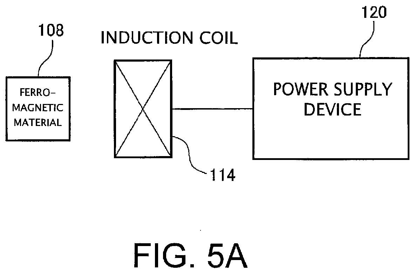

A method for wirelessly transferring electromagnetic power from an induction coil to a heated element will now be described by reference to FIGS. 5A to 5E. FIGS. 5A to 5E show examples of the method. In the following description, the heated element 108 will be used as an example to represent the heated elements 108, 208, 308, and the induction coil 114 will be used as an example to represent the induction coils 114, 214, 314. It should be noted that electromagnetic power is transferred in the same manner as described below when the heated elements 208, 308 are used as the heated element and the induction coils 214, 314 are used as the induction coil.

In the example shown in FIG. 5A, the heated element 108 is a ferromagnetic material. For example, a ferroferromagnetic material such as iron or nickel is used. An AC ferromagnetic field generated by the induction coil 114 induces the heated element 108, which is a ferromagnetic material, to generate heat in an amount equivalent to hysteresis loop loss. The heated element 108 converts the AC ferromagnetic field from the induction coil 114 into heat, which corresponds to hysteresis loop loss. For example, an alternating current of approximately 100 kHz is used. In order that the vacuum chamber according to each embodiment (e.g., the vacuum chamber 102) does not magnetically shield the AC ferromagnetic field, an electrical insulator such as glass is used as the material of the vacuum chamber. When a metal is to be used as the material of the vacuum chamber, a the wall thickness of the vacuum cell must be sufficiently thinner than the skin depth..

In consideration that a ferromagnetic material is in the paramagnetic phase when the temperature of the ferromagnetic material becomes higher than the Curie temperature, and that the ferromagnetic material is in the ferromagnetic phase when the temperature becomes lower than the Curie temperature, a situation in which electromagnetic power can be transferred from the induction coil to the heated element arises when the temperature of the ferromagnetic material is lower than or equal to the Curie temperature. Accordingly, the upper limit temperature of the heated element is the Curie temperature. For this reason, when a ferromagnetic material having a Curie temperature that coincides with the target sublimation temperature of the sample is used as the heated element, the temperature of the sample and the nozzle will eventually become the target sublimation temperature or a temperature close thereto. In other words, a ferromagnetic material having a Curie temperature specified based on the target sublimation temperature of the sample is used as the heated element.

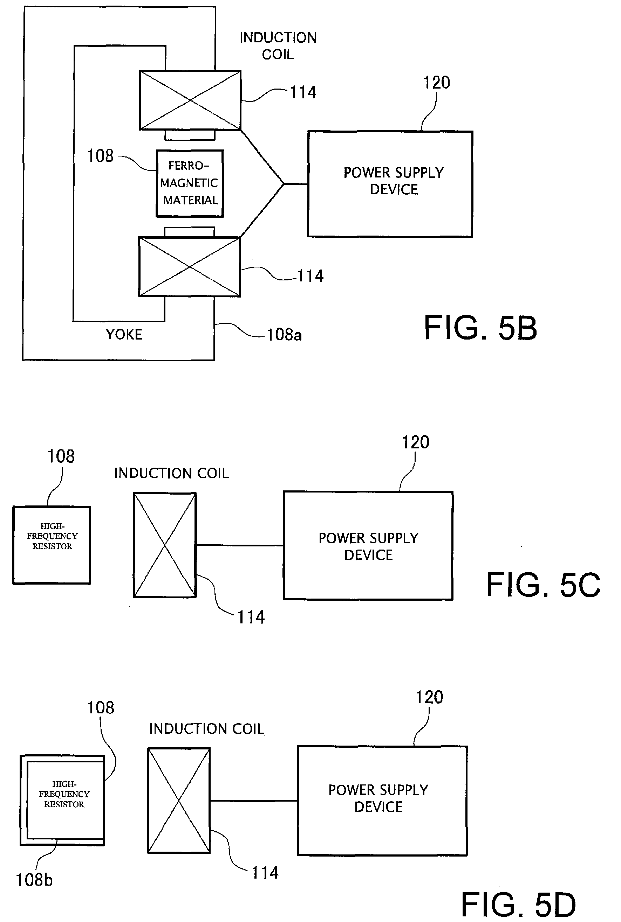

In the example shown in FIG. 5B, a ferromagnetic circuit 108a composed of a yoke is used in addition to the configuration shown in FIG. 5A. Ferromagnetic flux produced by the induction coil 114 is confined to the ferromagnetic circuit 108a. As a result, ferromagnetic energy is efficiently transferred to the heated element 108.

In the example shown in FIG. 5C, the heated element 108 is a high-frequency resistor. For example, copper is used as the high-frequency resistor. The heated element 108 composed of the high-frequency resistor receives high-frequency electromagnetic field produced by the induction coil 114, and eddy current is generated on the surface of the heated element 108. The eddy current loss is converted into heat. For example, a high frequency such as 10 MHz is used. In order that the vacuum chamber according to each embodiment (e.g., the vacuum chamber 102) does not magnetically shielded the AC ferromagnetic field, an electrical insulator such as glass is used as the material of the vacuum chamber. When a metal is to be used as the material of the vacuum chamber, the wall thickness of the vacuum cell must be sufficiently thinner than the skin depth..

In FIG. 5D, a high-frequency ferromagnetic shielding 108b is used in addition to the configuration shown in FIG. 5C. The surface of the heated element 108 facing the induction coil 114 is not covered by the high-frequency ferromagnetic shielding 108b, while the other surfaces are covered by the high-frequency ferromagnetic shielding 108b. The high frequency magnetic shield 108b in close proximity to the high-frequency resistive element shields and concentrates the high-frequency electromagnetic field produced by the induction coil 114, resulting in efficient conversion to heat.

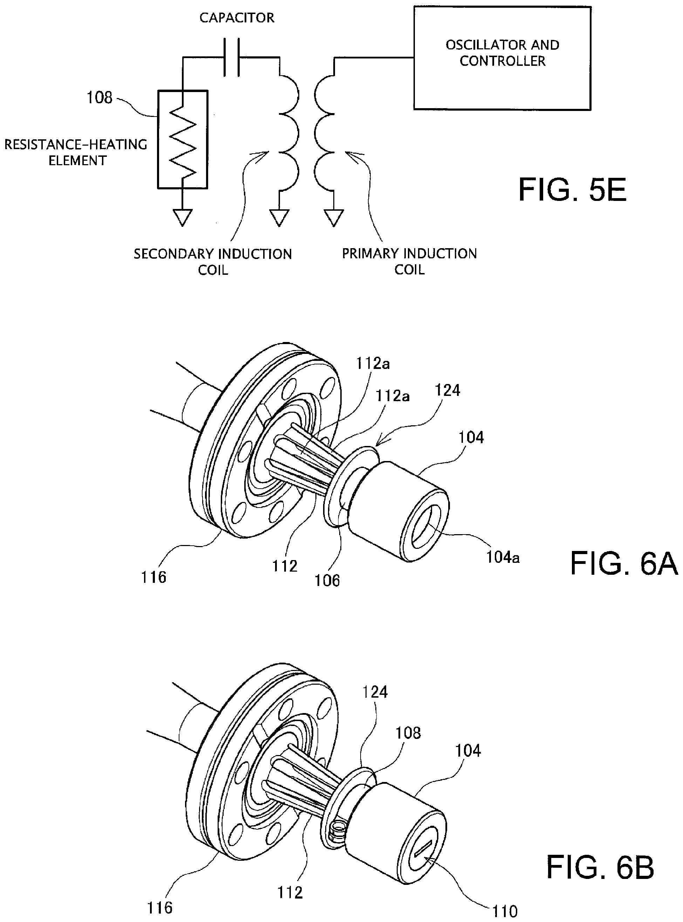

In the example shown in FIG. 5E, the heated element 108 is a resistor included in an LC resonator (or tank circuit). Via coils, an AC ferromagnetic field causes an AC current to be generated in the LC resonator, which is a secondary circuit. Joule heat is thereby generated in the heated element 108 in the secondary circuit. The LC resonator has a resonance frequency determined by the secondary coil and a capacitor. The frequency of an oscillator on the primary coil side is set to match this resonance frequency. As a result, the LC resonator resonates, and a large current can be efficiently caused to flow through the heated element 108. In order that the vacuum chamber according to each embodiment (e.g., the vacuum chamber 102) does not attenuate the AC ferromagnetic field, an electrical insulator such as glass is used as the material of the vacuum chamber. When a metal is to be used as the material of the vacuum chamber, the wall thickness of the vacuum cell must be sufficiently thinner than the skin depth..

A power supply used in the configuration shown in FIG. 5A may be, for example, a power supply used in an induction cooker or the like. As the frequency band, for example, an LF band of 100 kHz is used.

A power supply used in the configuration shown in FIG. 5E may be, for example, a power supply for wireless charging used for portable terminals such as smartphones and mobile phones. For example, technology utilizing an AC ferromagnetic field in a band of 100 kHz to 200 kHz (e.g., U.S. Patent Application Publication No. 2021/044132) may be used.

According to the above-described first to third embodiments, since energy can be wirelessly supplied to the heated element, no terminal for heating is necessary. Further, since the induction coil itself, which is installed on the outside (i.e., the atmosphere side) of the vacuum chamber, does not generate heat, the structures located on the atmosphere side can be operated safely.

Furthermore, since energy can be supplied to a localized area, thermal insulation is facilitated, and a simple design can be used as the structure of the vacuum chamber..

In the wireless induction heating method according to the embodiments, discrete components such as the nozzle, the sample, and the heated element are the objects to be handled independently, and the discrete components alone can be heated locally. Further, a process of installing the discrete components is simplified. For example, the atomic beam generator may be fixed in the vacuum chamber within the physics package by simply paying attention to the position and orientation of the nozzle. Since each discrete component can be mounted or removed individually, the work of placing and removing samples is simple.

In contrast, in a wired resistance heating method according to conventional technology, it is necessary to take into consideration the circumstance that a heater is connected using a connector and wiring. Since the heating method uses wires, the entire resistance wire generates heat. In an ultra-high vacuum environment, it is typical to use a crimp terminal for connecting a wire that is heated to high temperatures. In a situation where a crimp terminal or the like is used, it cannot be said that localized energy transfer is achieved. Furthermore, a wired heating method brings about design difficulties described below.

In order to save as much unnecessary heat as possible, heater lead wires should be made short. On the other hand, for thermal insulation, the length of an insulator connecting between a high-temperature part and a room-temperature part should be increased. As such, the condition for power saving and the condition for enhancing the thermal insulation thermal insulation are in conflict with each other. Therefore, in a wired heating method, there is difficulty in simultaneously satisfying these two conditions.

Further, in order to save as much unnecessary heat as possible, heater lead wires located near the nozzle should be made short. On the other hand, space is required around the sample insertion opening of the sample reservoir to allow easy loading and unloading of the sample. As such, the condition for power saving and the condition for easy loading and unloading samples are in conflict with each other. Therefore, in a wired heating method, there is difficulty in simultaneously satisfying these two conditions.

According to the first to third embodiments, the atomic beam generator can be easily integrated into an apparatus such as an atomic clock without being modularized. Further, according to the third embodiment, the flange can be omitted.

Speaking in terms of the flow of atoms in a physics package, an atomic beam generator is generally located at the furthest upstream position. For this reason, cases where an atomic beam generator is installed at an end of the vacuum chamber of a physics package are occasionally found. In particular, there are many cases where a flange is provided at an end of a vacuum chamber of a physics package, a modularized atomic beam generator is fixed and vacuum-sealed with the flange. With an atomic beam generator that employs a wired heating method, it is unavoidable to adopt this type of structure, in consideration of factors such as the ease of placing and removing samples, thermal contact between the heater and the sample or nozzle, and the method for attaching a connector to the flange. However, this type of structure presents difficulties in reducing the size of the device.

In contrast to this, in the first to third embodiments, a sample, a heating element, thermal insulation member, and the like are supported by adjacent module in the vacuum chamber of the physical package to form the atomic beam generator.

Further, in the first to third embodiments, a window that transmits infrared light may be provided on a part of the vacuum chamber, and a sensor that detects infrared light may be provided outside the vacuum chamber. By detecting infrared light, the temperature inside the vacuum chamber can be measured. For example, infrared light emitted from the heated element, the sample, and the nozzle is released to the outside of the vacuum chamber through the window and detected by the sensor. With this arrangement, the temperature of the heated element, the sample, and the nozzle can be measured. By controlling, in response to the measured temperature, a current supplied to the induction coil, the temperature of the sample and the nozzle can be controlled. For example, the temperature of the sample and the nozzle can be adjusted to a target sublimation temperature.

Comparisons will now be made between the atomic beam generators according to the first to third embodiments and atomic beam generators that use heating methods according to conventional technology. The heating methods according to conventional technology include a Joule heating method, a laser method, and a field emission method.

Lucas (C. B. Lucas, "Atomic and Molecular Beams: Production and Collimation", 2013, CRC Press) describes an atomic beam oven that uses a Joule heating method. Joule heat heats the sample to a temperature above the sublimation temperature, causing sublimated to provide atomic vapor.

Compared to this device using a Joule heating method, the first to third embodiments are more suitable for achieving size and weight reduction of an atomic beam generator. Further, according to the first to third embodiments, it is possible to heat the sample locally and efficiently. In addition, the sample temperature can be easily controlled.

US 10,342,113 B describes an atomic beam oven that uses a laser. In this device, laser is irradiated onto a sample, and the portion where the laser is irradiated is heated. As a result, atomic vapor is generated. Alternatively, molecular bonds in the sample compound are broken, and the ablated molecules vapor are generated.

US 10,342,113 B describes that a metal containing target atoms is used as a raw material. As an alternative, it is also described that the surface of the metal containing the target atoms may be oxidized, and that an oxide containing the target atoms is used as the raw material.

A publication Phys. Rev. A76, 055403 (D. R. Leibrandt et al.) describes using SrTiO3 as a strontium ion source.

When using a laser method, atoms can be sublimated or ablated wirelessly through an optical window. Based on this property, device size reduction and an increase in the efficiency of energy transfer can be expected, as in the case of using an induction heating method. On the other hand, in a laser method, since a highly directional laser light is used, alignment of optical components must be adjusted. In addition, it is necessary to note that energy transfer depends on the surface condition of the sample. For example, even when the surface of a sample is flat and has a good optical characteristic immediately after start of use, the surface becomes eroded and the optical characteristic deteriorates as the sample is being used. It is predicted that, in this situation, the flux of the atomic beam will decrease with time.

Further, as mentioned in the publication Phys. Rev. A76, 055403 (D. R. Leibrandt et al.), although a low ion flow rate obtained by µm-sized spot irradiation may sufficiently meet the requirement for an atomic clock using a single ion trap method, such an atomic flux does not meet the requirement for a device such as an optical lattice clock, which requires a certain level of atomic flux.

US 2021/257177 A describes an atomic beam oven that uses a field emission method. In a field emission method, a strong electric field is applied to a sample to cause neutral atoms as well as ions to be emitted from the sample. Neutral atoms having a desired energy level are separated from ions having a different energy level by, for example, using an electric field. As a result, not only ions but also neutral atoms can be selectively ejected.

However, although a field emission method is suitable for an ion beam, it is not necessarily suitable for a neutral atom beam.

Further, US 7,955,551 B describes providing a receptor for absorbing impurity gases around a dispenser in view of the circumstance that commercially available dispensers emit a large amount of impurity gases during use. As the method for heating the dispenser, a resistance heating method, an induction heating method, and a laser method are mentioned. As the induction heating method, there is used a method in which eddy current is generated in a sample due to working of an induction coil to thereby heat the sample. However, the configuration described in this document is not suitable for an atomic beam generator which requires directionality of the atomic beam, a controlled flux of the atomic beam, ease of loading and unloading samples, and versatility for samples that are not necessarily directly sensitive to AC ferromagnetic field. Furthermore, the amount of eddy current generated in a sample depends on the total surface area and surface roughness of the sample. Every time evaporated atoms are released from the sample, the volume of the sample decreases, and the surface of the sample becomes rough. For this reason, the amount of heat transfer by induction heating may decrease with time.

In contrast to this, according to the first to third embodiments, heat is not provided directly by eddy current losses in the sample, but indirectly by transferring electromagnetic energy to the heated element. Since the heating of the sample does not depend on the surface area or surface roughness of the sample, the amount of heat transfer does not decrease with time.

### <Specific Example of First Embodiment>

A specific example of the first embodiment will now be described by reference to FIGS. 6A to 6D. FIGS. 6A to 6D are perspective views showing a configuration of the specific example of the first embodiment. The configuration shown in FIGS. 6A to 6D is a specific example of the configuration shown in FIG. 2.

FIG. 6A shows an exterior view of a sample reservoir 104, a nozzle 106, a thermal insulation member 112, and a flange 116.

The thermal insulation member 112 extends from the flange 116 to the sample reservoir 104, and supports the sample reservoir 104. In order to suppress heat conduction, the cross-sectional area of the thermal insulation member 112 is made small, and a plurality of slits 112a are formed in the thermal insulation member 112 along the direction of extension of the thermal insulation member 112.

An electroferromagnetic shielding 124 is installed between the sample reservoir 104 and the flange 116 in order to prevent a ferromagnetic field from leaking to the adjacent module (i.e., in the direction in which the atomic beam travels). For example, the electroferromagnetic shielding 124 is installed near the tip of the nozzle 106. The electroferromagnetic shielding 124 may also have the function of blocking thermal radiation path from the sample reservoir 104 and the nozzle 106. For example, the electroferromagnetic shielding 124 may have the function of blocking heat from being transferred to the adjacent module due to heat radiation.

The sample reservoir 104 has an insertion opening 104a formed on the side opposite to the nozzle 106. A sample 118 is inserted into the sample reservoir 104 or taken out from the sample reservoir 104 via the insertion opening 104a. A thread groove is formed along the side surface of the insertion opening 104a so that a lid 110 can be screwed on the insertion opening 104a. For example, the nozzle 106 is press-fitted to the sample reservoir 104.

FIG. 6B additionally shows a heated element 108 and a lid 110. The heated element 108 is, for example, installed in contact with the sample reservoir 104 and in a manner surrounding the nozzle 106. For example, the heated element 108 is crimped in place by a clamp. In this example, the heated element 108 is a ferromagnetic material. The lid 110 is mounted on the sample reservoir 104, and the insertion opening 104a is closed by the lid 110.

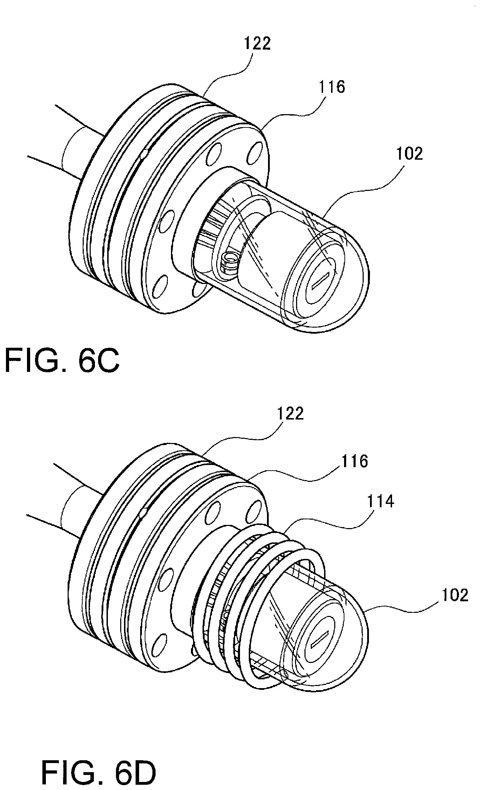

FIG. 6C additionally shows a vacuum chamber 102. The vacuum chamber 102 is fixed to the flange 116 so as to cover the sample reservoir 104, the nozzle 106, the heated element 108, the lid 110, and the thermal insulation member 112. In this example, glass, which is an example material that transmits an electroferromagnetic field, is used as the material of the vacuum chamber 102. The inside of the vacuum chamber 102 is maintained ultra high vacuum conditions.

FIG. 6D additionally shows an induction coil 114. The induction coil 114 is installed on the outside (i.e., the atmosphere side) of the vacuum chamber 102 at a position close to the heated element 108. For example, the induction coil 114 is a solenoid coil, and is installed outside the vacuum chamber 102 in a manner surrounding the heated element 108. The induction coil 114 wirelessly transfers an AC ferromagnetic field of 100 kHz to the heated element 108 composed of a ferromagnetic material.

Here, in order that the AC ferromagnetic flux emitted from the induction coil 114 is focused and guided to the heated element 108, a soft magnet with low hysteresis loss and high ferromagnetic permeability may be installed between the induction coil 114 and the heated element 108.

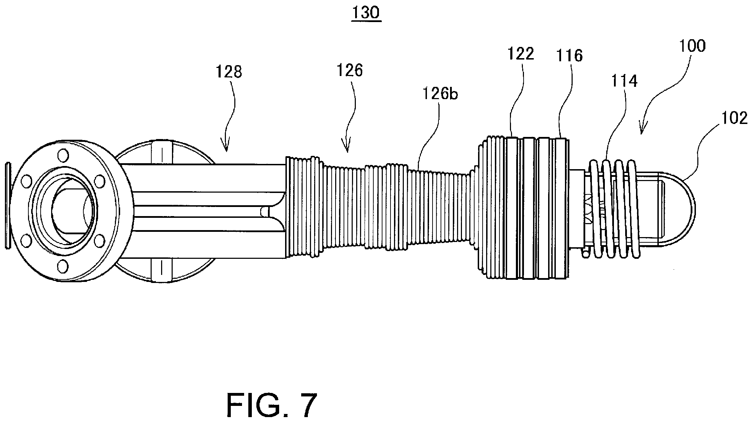

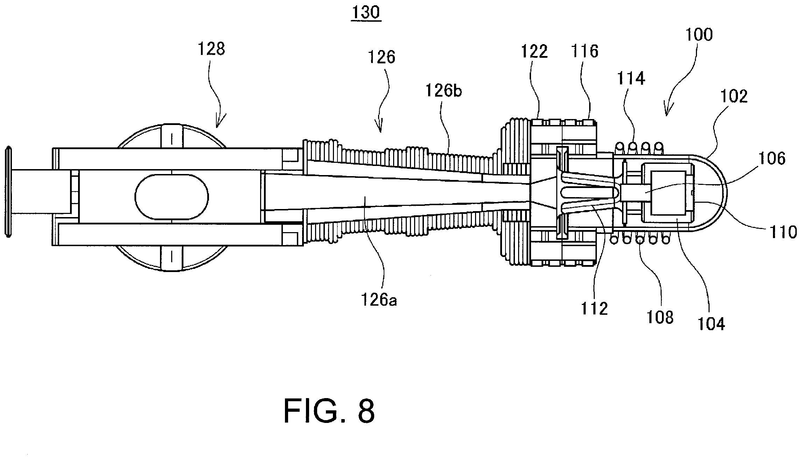

FIGS. 7 and 8 show a physics package 130 according to the first embodiment. FIG. 7 is a diagram showing an exterior view of the physics package 130. FIG. 8 is a cross-sectional view showing the physics package 130, which is taken along a plane including the atomic beam axis.

The physics package 130 includes the atomic beam generator 100 according to the first embodiment, a Zeeman slower 126, and a magneto-optical trap device (MOT device) 128, and is configured to perform magneto-optical trapping and cause clock transitions.

The Zeeman slower 126 includes a bore 126a and a ferromagnetic field generator 126b. The ferromagnetic field generator 126b includes, for example, a solenoid coil, and generates a ferromagnetic field along the central axis of the bore 126a. An atomic beam emitted from the atomic beam generator 100 is radiated into the bore 126a. The Zeeman slower 126 uses the Zeeman slower technique to decelerate the velocity of the atomic beam, which has been emitted from the atomic beam generator 100 and which has a high initial velocity, to a velocity that allows the subsequent magneto-optical trap device 128 to trap atoms. The high-temperature atomic beam travels within the bore 126a toward the magneto-optical trap device 128 while being decelerated according to the Zeeman slower technique. A known Zeeman slower is used as the Zeeman slower 126.

The magneto-optical trap device 128 includes a vacuum chamber, a ferromagnetic field generator, and a plurality of optical elements (e.g., mirrors, beam splitters, and the like). The inside of the vacuum chamber is maintained ultra-high vacuum conditions. The interior of the vacuum chamber is connected to the bore 126a of the Zeeman slower 126 and the vacuum chamber 102 of the atomic beam generator 100, and the inside of the bore 126a and the vacuum chamber 102 is maintained ultra-high vacuum conditions. Within the vacuum chamber, there is formed a trapping space where atoms are trapped.

The operation of the physics package 130 will now be described.

In the physics package 130, the inside of the vacuum chamber is under ultra-high vacuum. An atomic beam emitted from the atomic beam generator 100 to the Zeeman slower 126 is sufficiently decelerated according to the Zeeman deceleration technique, and arrives at the magneto-optical trap device 128.

Inside the magneto-optical trap device 128, a ferromagnetic field having a linear spatial gradient is formed in and around the trapping space where atoms are trapped, and MOT light is radiated. As a result, atoms are trapped in the trapping space. The slow atomic beam that has arrived at the magneto-optical trap device 128 is decelerated in the trapping space, and atoms is thereby trapped in the trapping space. Furthermore, an optical lattice light beam is radiated into the trapping space and is reflected by an optical cavity provided in the vacuum chamber, so that there is formed an optical lattice potential in which a standing wave extends in the direction of travel of the optical lattice light beam. The atoms are trapped in the optical lattice potential.

By slightly changing the wavelength, the optical lattice can be moved in the direction of travel of the optical lattice light beam. By using a means of movement provided by this moving optical lattice, the atoms are moved to a clock transition space. As a result, clock transition space is off the atomic beam axis.

In the clock transition space, atoms are radiated with laser light whose optical frequency is controlled, and high-precision spectroscopy is performed on clock transitions (i.e., atomic resonance transitions that serve as the clock reference) so as to measure the invariable frequency unique to the atoms. With this process, an accurate atomic clock is obtained. When it is unnecessary to move the atoms from the trapping space to the clock transition space, spectroscopy may be performed in the trapping space.

To improve the precision of an atomic clock, it is necessary to eliminate perturbations around the atoms and read out the frequency accurately. Of particular importance is elimination of frequency shifts due to the Doppler effect caused by thermal motion of the atoms. In an optical lattice clock, motion of the atoms is suspended by using an optical lattice created by interference of laser light to confine the atoms within a space sufficiently small in comparison to the wavelength of the clock laser. Yet at the same time, within the optical lattice, the frequency of the atoms becomes shifted by the laser light forming the optical lattice. Accordingly, by selecting a specific wavelength and frequency, called a "magic wavelength" or "magic frequency", for the optical lattice light beam, the influence of the optical lattice on the resonance frequency is eliminated.

Light emitted as a result of clock transitions is received by the optical system apparatus 14 and is subjected to spectroscopic processing and the like by the control apparatus 16, and its frequency is determined.

### <Specific Example of Second Embodiment>

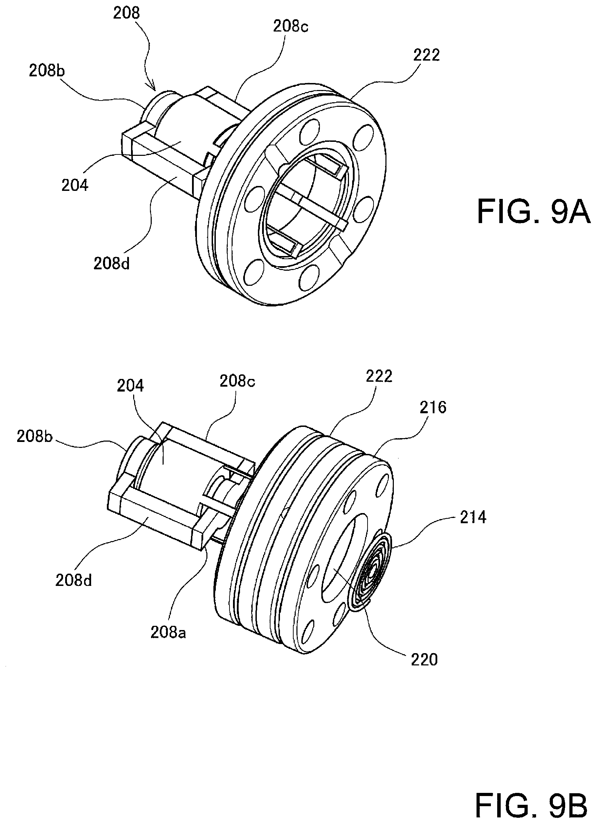

A specific example of the second embodiment will now be described by reference to FIGS. 9A and 9B. FIGS. 9A and 9B are perspective views showing a configuration of the specific example of the second embodiment. The configuration shown in FIGS. 9A and 9B is a specific example of the configuration shown in FIG. 3.

FIG. 9A shows a sample reservoir 204, a heated element 208, and a flange 222. FIG. 9B shows the sample reservoir 204, the heated element 208, an induction coil 214, a flange 216, a window 220, and the flange 222.

In this example, the heated element 208 is a ferromagnetic material. Further, the induction coil 214 is a flat spiral coil.

The heated element 208 includes heated element portions 208a to 208d. The heated element portion 208a is located at a position facing the induction coil 214 across the window 220 provided in the flange 216. The heated element portion 208b is located at a position opposite to the heated element portion 208a across the sample reservoir 204. The heated element portion 208b is installed in contact with the nozzle 206. The heated element portions 208c, 208d are members connecting between the heated element portion 208a and the heated element portion 208b, and are installed along the sample reservoir 204. In this way, in the second embodiment, the sample reservoir 204 is covered by the heated element 208. The entire sample reservoir 204 may be covered by the heated element 208, or as shown in FIG. 9B, part of the sample reservoir 204 may be covered by the heated element 208. The heated element portion 208a facing the induction coil 214 receives ferromagnetic energy from the induction coil 214. Since the heated element portion 208a is connected to the heated element portions 208b, 208c, 208d, the entire heated element 208 is heated.

Space is formed between the heated element portion 208a and the induction coil 214, and a distance is present between the heated element portion 208a and the induction coil 214. In order that an AC ferromagnetic flux emitted from the induction coil 214 is focused and guided to the heated element 208, a soft magnet with low hysteresis loss and high ferromagnetic permeability may be installed between the induction coil 214 and the heated element portion 208a.

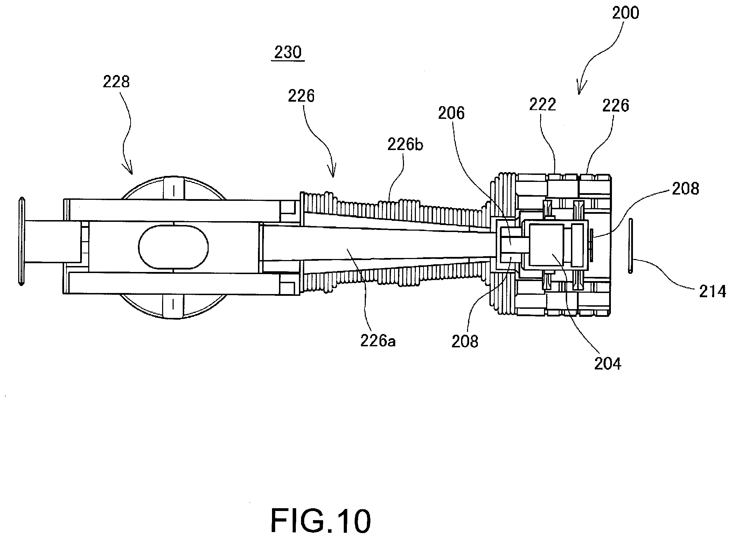

FIG. 10 shows a physics package 230 according to the second embodiment. FIG. 10 is a cross-sectional view showing the physics package 230, which is taken along a plane including the atomic beam axis.

The physics package 230 includes the atomic beam generator 200 according to the second embodiment, a Zeeman slower 226, and a magneto-optical trap device 228. The Zeeman slower 226 includes a bore 226a and a ferromagnetic field generator 226b, as with the Zeeman slower 126 according to the first embodiment. In the example shown in FIG. 10, a vacuum chamber is formed by the flange 222 and the like, and the atomic beam generator 200 is installed therein.

### <Specific Example of Third Embodiment>

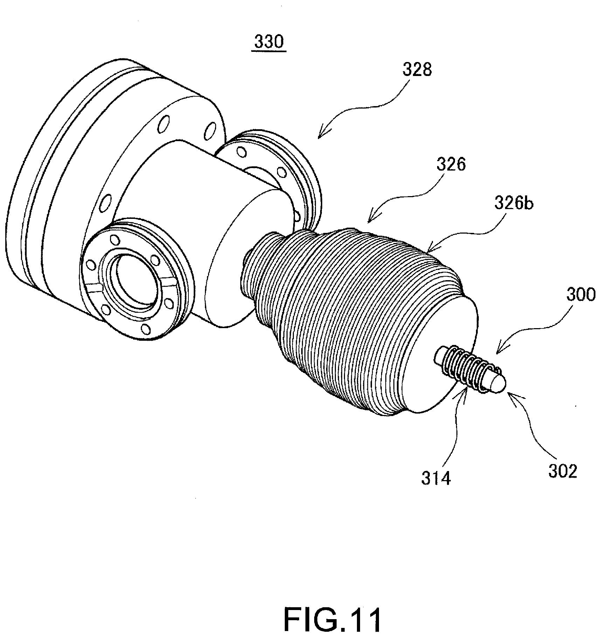

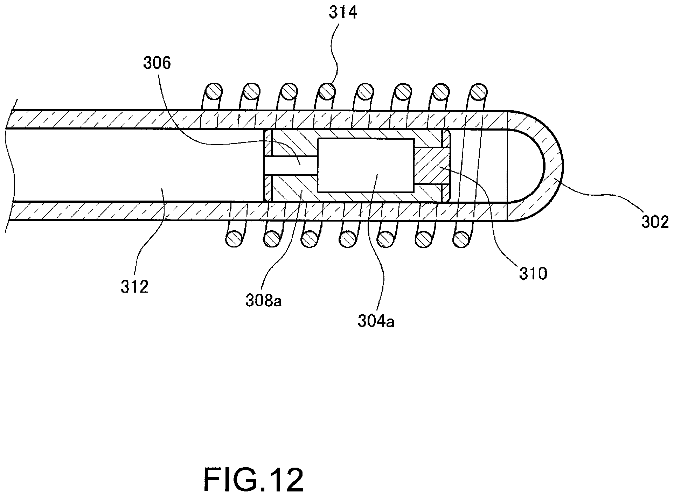

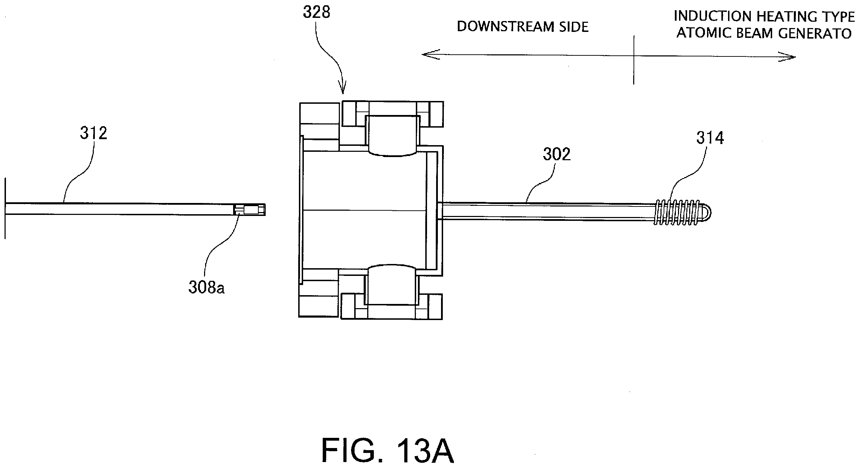

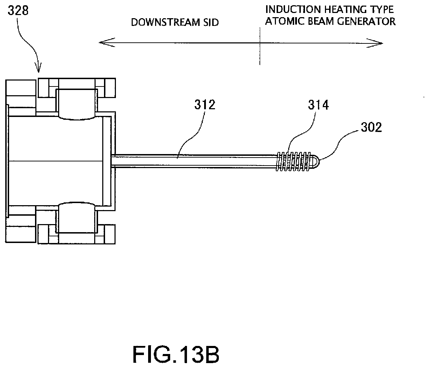

A specific example of the third embodiment will now be described by reference to FIGS. 11, 12, 13A, and 13B. FIG. 11 is a perspective view showing the exterior of a physics package according to the third embodiment. FIG. 12 is a cross-sectional view showing a configuration of the specific example of the third embodiment. FIGS. 13A and 13B are diagrams showing a configuration of the specific example of the third embodiment.

As shown in FIG. 11, the physics package 330 includes the atomic beam generator 300 according to the third embodiment, a Zeeman slower 326, and a magneto-optical trap device 328. The Zeeman slower 326 includes a bore (not shown in drawing) and a ferromagnetic field generator 326b, as with the Zeeman slower 126 according to the first embodiment.

As shown in FIG. 12, a nozzle 306, a heated element 308a, and a lid 310 are installed inside a vacuum chamber 302 while being supported by a thermal insulation member 312 from the side toward the Zeeman slower 326, which is an adjacent module of atomic beam generator 326 in the physics package 330.

The heated element 308a is attached to at end of the thermal insulation member 312. In this example, the heated element 308a is a ferromagnetic material. In the example shown in FIG. 12, the heated element 308a also serves as the sample reservoir 304 shown in FIG. 4. That is, a sample reservoir 304a is formed within the heated element 308a, and the sample 318 is loaded into the sample reservoir 304a. The nozzle 306 and the lid 310 are mounted on the heated element 308a. The capillary in nozzle 306 extends from the sample chamber 304a. The lid 310 is a member that covers an opening of the sample chamber 304a (i.e., an opening for loading and unloading a sample from the sample chamber 304a) at a position opposite to the nozzle 306 across the sample chamber 304a.

The thermal insulation member 312 has a cylindrical shape, and has a bore therein through which an atomic beam emitted from the nozzle 306 passes. An atomic beam emitted from the nozzle 306 passes through the thermal insulation member 312 and travels to the subsequent Zeeman slower 326. The thermal insulation member 312 is installed in vacuum in the physics package 330.

The induction coil 314 is installed on the outside (i.e., the atmosphere side) of the vacuum chamber 302 in a manner surrounding the heated element 308a.

FIG. 13A illustrates a state before the thermal insulation member 312 is installed in the vacuum chamber 302. In FIG. 13A, the components of the atomic beam generator 300 and the magneto-optical trap device 328 are shown, but illustration of the Zeeman slower 326 is omitted.

The vacuum chamber 302 is, for example, an elongate cylindrical member, and is provided extending from the magneto-optical trap device 328. The upstream end of the vacuum chamber 302 (i.e., the upstream end corresponding to the location where the induction coil 314 is installed) is closed, while the downstream end opposite to the upstream end is open. At the upstream end of the vacuum chamber 302, an induction coil 314 is wound on the outside of the vacuum chamber 302.

The heated element 308a is attached to the upstream end of the thermal insulation member 312. The sample 318 is loaded into the sample reservoir 304a, and the opening of the sample reservoir 304a is closed by the lid 310. In that state, the thermal insulation member 312 is inserted into the vacuum chamber 302 from the downstream side of the physics package 330 (e.g., the magneto-optical trap device 328 side), with the heated element 308a at the upstream end. More specifically, the thermal insulation member 312 is inserted into the vacuum chamber 302 from the downstream end of the vacuum chamber 302. For example, the thermal insulation member 312 is attached to a component in a downstream part of the physics package 330 (e.g., the magneto-optical trap device 328 or the like) by a fastener such as screws.

FIG. 13B illustrates a state after the thermal insulation member 312 is installed in the vacuum chamber 302. The heated element 308a mounted on the upstream end of the thermal insulation member 312 is located at the upstream end of the vacuum chamber 302. Accordingly, the heated element 308a is installed at a position corresponding to the induction coil 314.

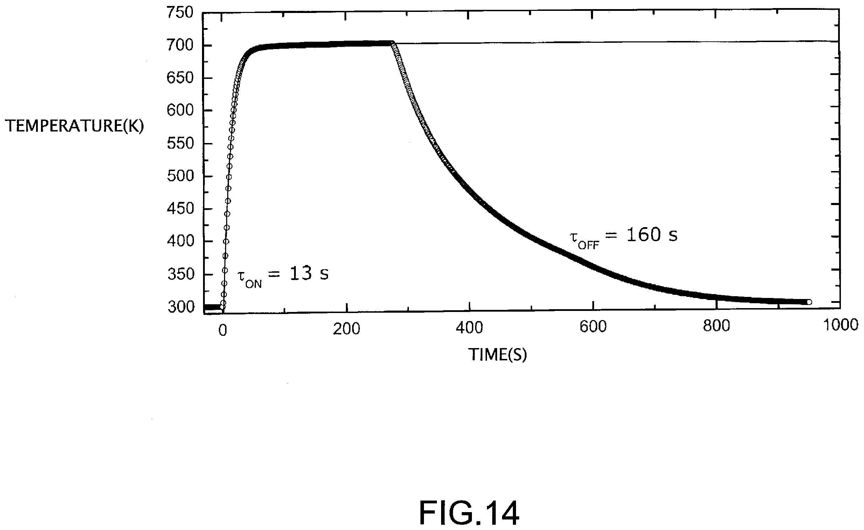

FIG. 14 shows a result of an experiment using the atomic beam generator 300 according to the third embodiment. The horizontal axis represents time, and the vertical axis represents the temperature of the ferromagnetic material, which is the heated element.

The inside of the vacuum chamber 302 was under vacuum, and an AC current (of, for example, 2.0 [A]; at that time, power applied to the induction coil 314 was 5.3 [W]) was supplied to the induction coil 314. When the AC current was made to flow in the induction coil 314, the temperature of the ferromagnetic material, which was the heated element installed in vacuum, reached 700.5 [K]. The heating time constant was 13 seconds. Assuming that strontium is to be used as the sample, which is an atom source, the temperature of the heated element exceeded the sublimation temperature of the sample in vacuum, and sufficient heat generation was obtained.

### <Atomic Beam Generator According to Fourth Embodiment>

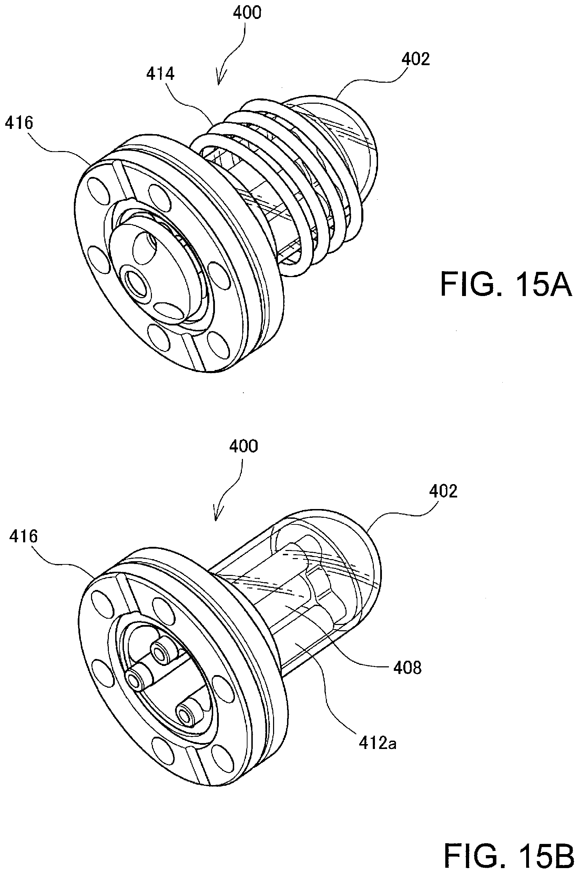

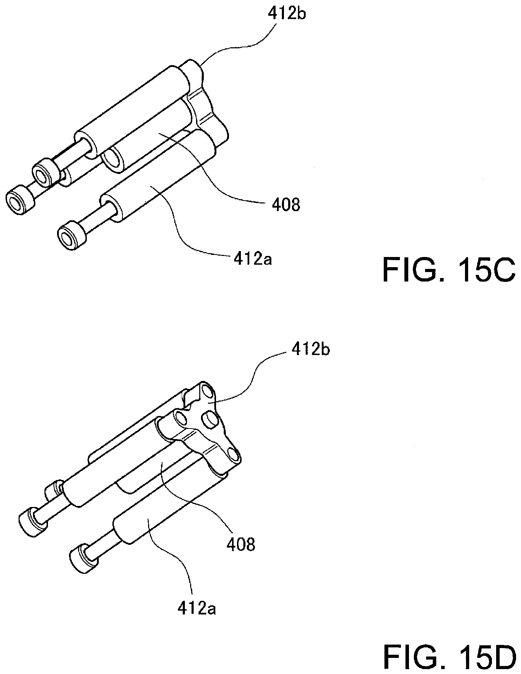

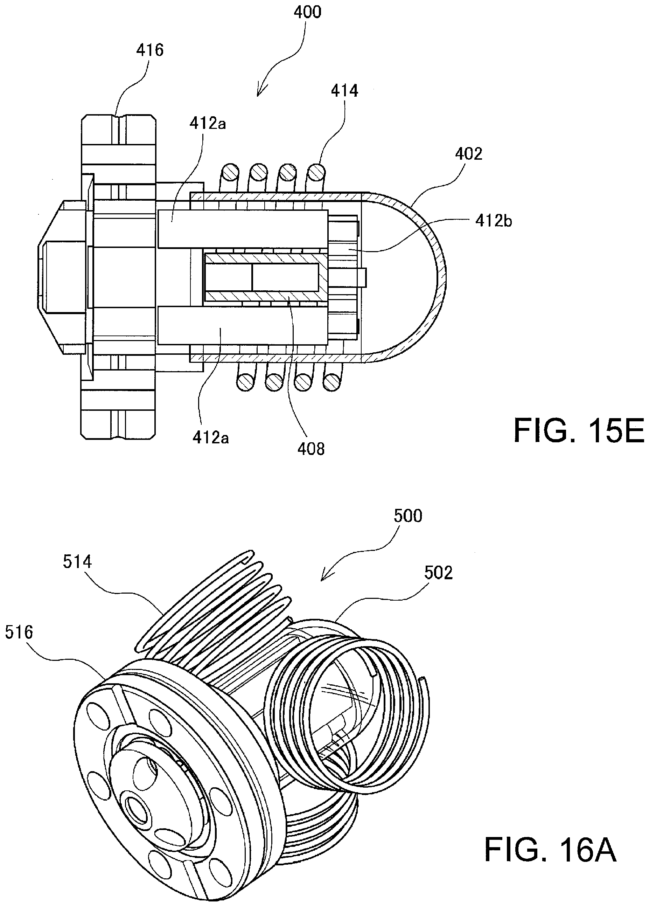

An atomic beam generator 400 according to a fourth embodiment will now be described by reference to FIGS. 15A to 15E. FIGS. 15A and 15B are perspective views showing a configuration of the atomic beam generator 400. FIGS. 15C and 15D are perspective views showing a thermal insulation member 412a and a heated element 408 according to the fourth embodiment. FIG. 15E is a cross-sectional view showing the atomic beam generator 400.

A vacuum chamber 402 is a cylindrical container with a closed upstream end and an open downstream end. A flange 416 is provided on the downstream end side. A heated element 408 and a thermal insulation member 412a are inserted into the vacuum chamber 402 from the downstream end side of the vacuum chamber 402 to be installed therein.

The heated element 408 has a cylindrical tube shape, and a sample chamber, which is a space, is formed therein. A sample, which is an atom source, is placed inside this sample chamber. The heated element 408 may have a configuration similar to that of the heated element 308a according to the third embodiment. An induction coil 414 is wound on the outside (i.e., the atmosphere side) of the vacuum chamber 402 at a position corresponding to the heated element 408.

As shown in FIGS. 15C and 15D, a plurality of thermal insulation members 412a are installed to surround the heated element 408 that constitutes the sample chamber. Each thermal insulation member 412a is, for example, a rod-shaped member. For example, three thermal insulation members 412a are arranged at uniform intervals in a manner surrounding the heated element 408. Each thermal insulation member 412a is arranged to extend from an upstream end part of the vacuum chamber 402 to the flange 416. At one end of the heated element 408 (i.e., one end toward the upstream end of the vacuum chamber 402), a base 412b is provided. One end of each thermal insulation member 412a is attached to the base 412b, and each thermal insulation member 412a is arranged to extend up to the flange 416. Here, the number of thermal insulation members 412a is only an example. Three or more thermal insulation members 412a may be provided, or one or two thermal insulation members 412a may be provided.

The heated element and the sample reservoir may be constructed separately, and the plurality of thermal insulation members 412a may be arranged to surround the heated element and the sample reservoir.

### <Atomic Beam Generator According to Fifth Embodiment>

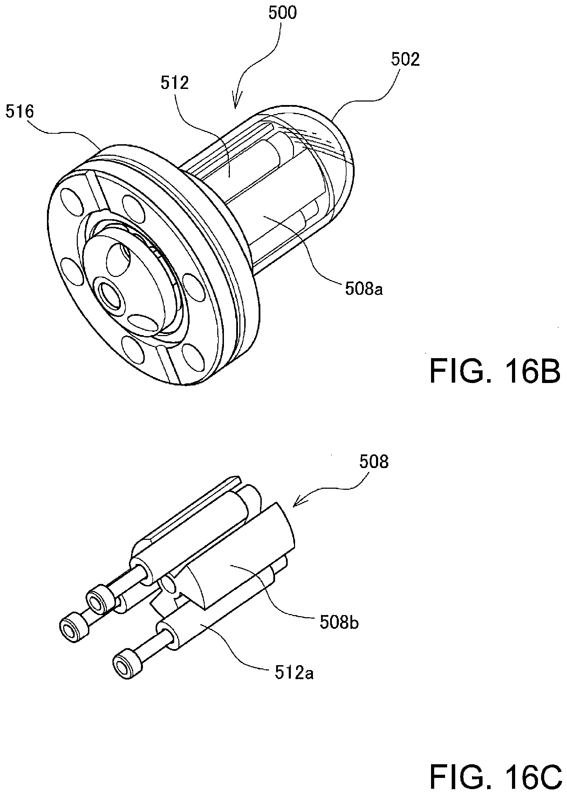

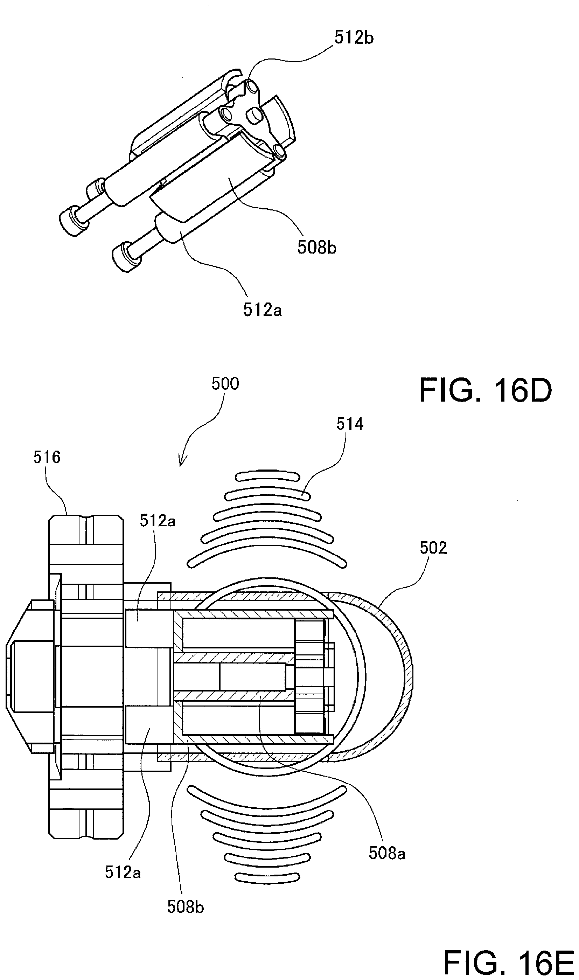

An atomic beam generator 500 according to a fifth embodiment will now be described by reference to FIGS. 16A to 16E. FIGS. 16A and 16B are perspective views showing a configuration of the atomic beam generator 500. FIGS. 16C and 16D are perspective views showing a thermal insulation member 512a and a heated element 508 according to the fifth embodiment. FIG. 15E is a cross-sectional view showing the atomic beam generator 500.

A vacuum chamber 502 is a cylindrical container with a closed upstream end and an open downstream end. A flange 516 is provided on the downstream end side. A heated element 508 and a thermal insulation member 512a are loaded into the vacuum chamber 502 from the downstream end side of the vacuum chamber 502 to be installed therein.

The heated element 508 includes a heated element portion 508a and a plurality of heated element portions 508b. The heated element portion 508a has a cylindrical tube shape, and a sample chamber, which is a space, is formed therein. A sample is placed inside this sample reservoir. The plurality of heated element portions 508b (for example, three heated element portions 508b) are arranged on the side surface of the heated element portion 508a while being spaced apart from each other in the circumferential direction of the heated element portion 508a. On the outside (i.e., the atmosphere side) of the vacuum chamber 602, a plurality of induction coils 514 are installed at positions corresponding to the heated element 508. For example, the induction coils 514 are installed at positions corresponding to the respective heated element portions 508b. Each heated element portion 508b receives ferromagnetic energy from its corresponding induction coil 514 and is heated, and consequently, the heated element portion 508a is heated. The surfaces of the heated element portions 508b facing the induction coils 514 are formed to have a large size so as to efficiently receive ferromagnetic energy from the induction coils 514. For example, the heated element portions 508b are formed such that the width of each heated element portion 508b in the circumferential direction increases with increasing distance from the heated element portion 508a.

As shown in FIGS. 16C and 16D, a plurality of thermal insulation members 512a are installed to surround the heated element portion 508a. For example, each thermal insulation member 512a is located between a heated element portion 508b and its adjacent heated element portion 508b. The thermal insulation members 512a are members identical to the thermal insulation members 412a according to the fourth embodiment. As in the fourth embodiment, a base 512b is provided at one end of the thermal insulation members 512a (i.e., one end toward the upstream end of the vacuum chamber 502). The one end of each thermal insulation member 512a is attached to the base 512b, and each thermal insulation member 512a is arranged to extend up to the flange 516. Here, although three thermal insulation members 512a are shown in FIGS. 16C and 16D, this number is only an example, as with the fourth embodiment.

### <Atomic Beam Generator According to Sixth Embodiment>

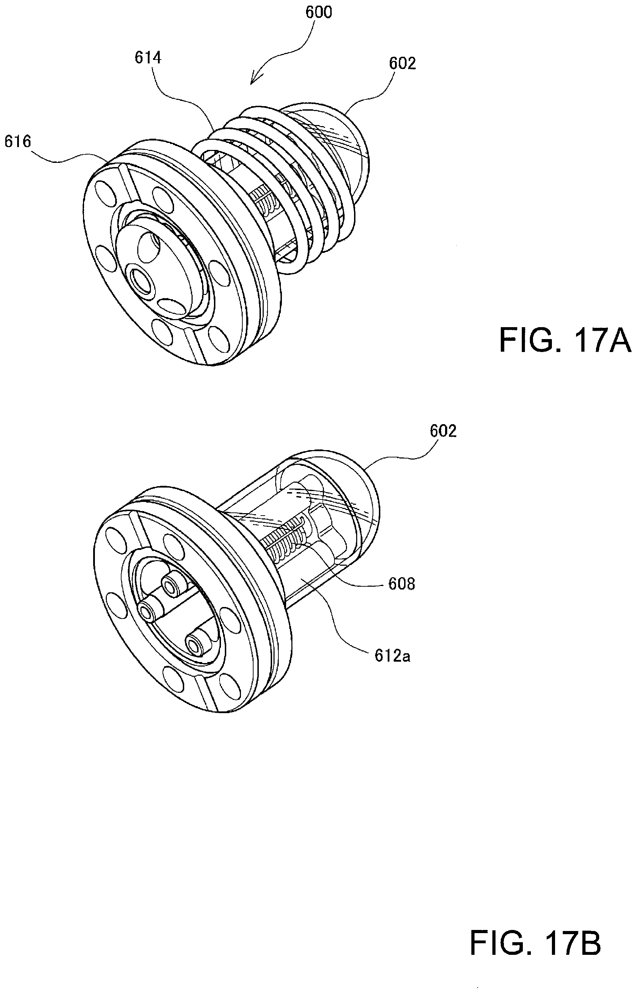

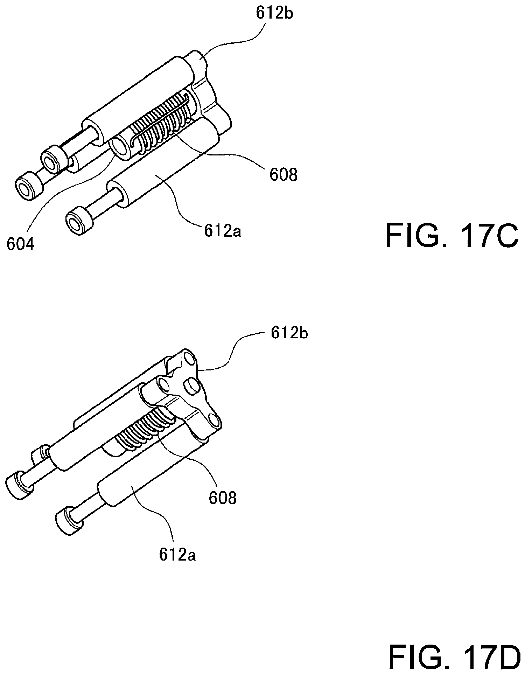

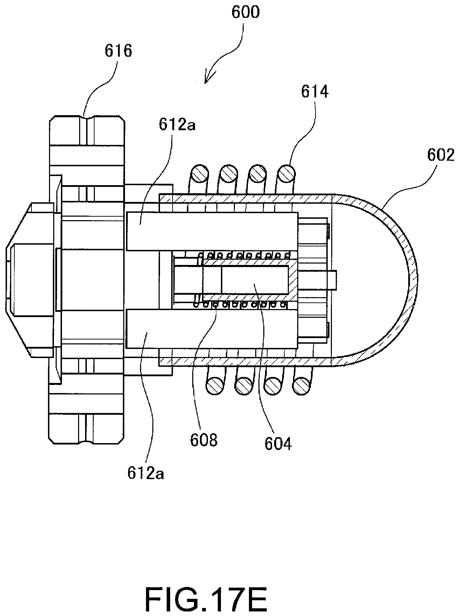

An atomic beam generator 600 according to a sixth embodiment will now be described by reference to FIGS. 17A to 17E. FIGS. 17A and 17B are perspective views showing a configuration of the atomic beam generator 600. FIGS. 17C and 17D are perspective views showing a thermal insulation member 612a and a heated element 608 according to the sixth embodiment. FIG. 17E is a cross-sectional view showing the atomic beam generator 600.

A vacuum chamber 602 is a cylindrical container with a closed upstream end and an open downstream end. A flange 616 is provided on the downstream end side. A sample reservoir 604, a heated element 608, and a thermal insulation member 612a are inserted into the vacuum chamber 602 from the downstream end side of the vacuum chamber 602 to be installed therein.

The sample reservoir 604 has a cylindrical tube shape, and a sample is loaded therein. The heated element 608 has the shape of a coil, and is wound around the sample reservoir 604. On the outside (i.e., the atmosphere side) of the vacuum chamber 602, an induction coil 614 is wound at a position corresponding to the heated element 608.

As shown in FIGS. 17C and 17D, a plurality of thermal insulation members 612a are installed to surround the sample reservoir 604 and the heated element 608. The thermal insulation members 612a are members identical to the thermal insulation members 412a according to the fourth embodiment. As in the fourth embodiment, a base 612b is provided at one end of the heated element 608 (i.e., one end toward the upstream end of the vacuum chamber 602). One end of each thermal insulation member 612a is attached to the base 612b, and each thermal insulation member 612a is arranged to extend up to the flange 616. Here, although three thermal insulation members 612a are shown in FIGS. 17C and 17D, this number is only an example, as with the fourth embodiment.

### <Atomic Beam Generator According to Seventh Embodiment>

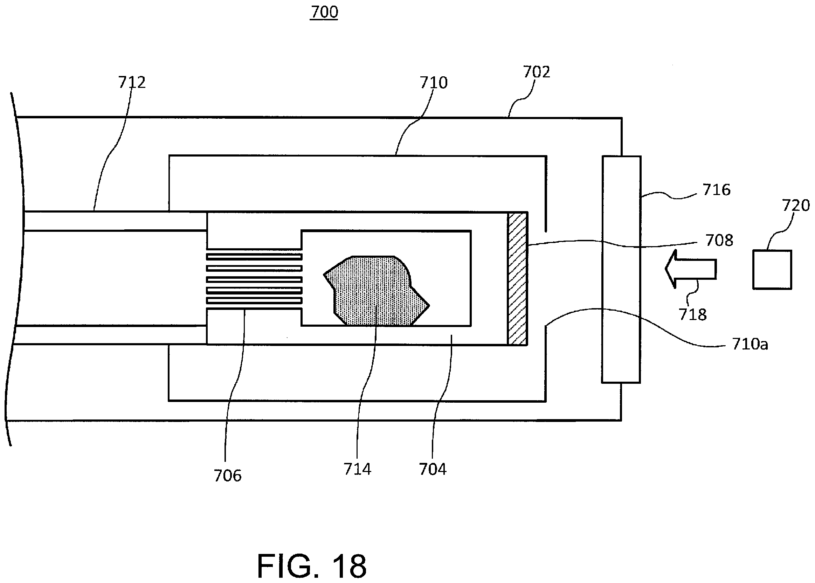

An atomic beam generator 700 according to a seventh embodiment will now be described by reference to FIG. 18. FIG. 18 is a diagram schematically showing a configuration of the atomic beam generator 700 according to the seventh embodiment. In the seventh embodiment, light is supplied to a heated element, and a sample is thereby heated.

The atomic beam generator 700 includes a vacuum chamber 702, a sample reservoir 704, a nozzle 706, a heated element 708, a radiation shield 710, a thermal insulation member 712, and a light source 720.

Inside the vacuum chamber 702, there are located the sample reservoir 704, the nozzle 706, the heated element 708, the radiation shield 710, and the thermal insulation member 712. The sample reservoir 704 contains a sample 714 serving as an atom source. The sample 714 is the same as the samples according to the above-described embodiments.

The sample reservoir 704, the nozzle 706, and the thermal insulation member 712 have the same configuration as those in the above-described embodiments. The radiation shield 710 is installed to cover the sample reservoir 704 and the nozzle 706.

The heated element 708 is installed at an end face of the sample reservoir 704 opposite to the end face at which the nozzle 706 is located. The heated element 708 is a member that functions as a photothermal converter which absorbs light and converts the light into heat. For example, the heated element 708 is formed by applying a light-absorbing coating onto the end face of the sample reservoir 704. An example of the light-absorbing coating is a black plating. Specifically, a low-reflection plating film which suppresses light reflection and in which reflectance with respect to laser light 718 is less than or equal to a certain value (e.g., less than or equal to 1%) is used as the heated element 708.

The sample reservoir 704 has the cylindrical tube shape. The diameter DH thereof is greater than the diameter DL of the laser light 718. For example, the diameter DH is approximately 5 mm, and the length LH is approximately 10 mm, but the diameter DH and the length LH are not limited to these values.

The vacuum chamber 702 has a vacuum window 716 installed at a position facing the heated element 708. The laser light 718 emitted from the light source 720 passes through the vacuum window 716 and is radiated onto the heated element 708. The radiation shield 710 has an opening 710a formed at a position corresponding to the heated element 708. The laser light 718 that has passed through the vacuum window 716 passes through the opening 710a and is radiated onto the heated element 708.

The light source 720 is an example of a wireless power transfer means, and is installed on the outside (i.e., the atmosphere side) of the atomic beam generator 700. For example, the diameter DL of the laser light 718 is approximately 2 mm and the optical power P is approximately 5 W. As is obvious, the characteristics of the laser light 718 are not limited to these. As an example of the light source 720, a semiconductor laser diode (having, for example, a wavelength of 915 nm and an optical power of 10 W) is used, but the light source 720 is not limited to this.

The operation of the atomic beam generator 700 according to the seventh embodiment will now be described.

The laser beam 718 emitted from the light source 720 passes through the vacuum window 716 and is radiated onto the heated element 708. The laser light 718 radiated onto the heated element 708 is converted into heat by the heated element 708. The heat generated from the heated element 708 is transferred to the sample reservoir 704. As a result, the sample 714 contained in the sample reservoir 704 is heated, and atomic vapor is generated. The atomic vapor passes through the nozzle 706 and is thereby ejected as an atomic beam having directionality.

In the example shown in FIG. 18, the heated element 708 is installed at a surface located opposite to the nozzle 706 from which the atomic beam is ejected. Further, the diameter DH of the sample reservoir 704 is greater than the diameter DL of the laser light 718. By employing such arrangement and sizes, it is possible to prevent the laser light 718 that has traveled through the vacuum window 716 and into the vacuum chamber 702 from traveling to a subsequent device installed beyond the nozzle 706. For example, the laser light 718 can be prevented from traveling to a subsequent device by diffraction.

As another example of the heated element 708, fine structure having structural color with a size corresponding to a specific wavelength range may be formed at a surface of the sample reservoir 704 so that light having that wavelength range is absorbed. In that case, laser light having that specific wavelength range is used as the laser light 718. As another example, a device having the above-noted fine structure may be installed on the surface of the sample reservoir 704.

Furthermore, by using a vacuum window 716 that transmits infrared radiation, the temperature of the sample reservoir 704 can be measured by detecting infrared radiation that has passed through the vacuum window 716.

It is noted that, in conventional technology, atomic ovens using LIAD (light-induced atomic desorption) are known (for example, US 10,342,113 B and US 2020/0335320 A). These devices have Drawbacks 1 and 2 described below.

### Drawback 1:

In these devices according to conventional technology, ablation laser light is directly radiated onto a surface of a sample. For this reason, when the surface of the sample is continuously irradiated with the ablation laser light for a long period of time, the optical characteristic of the surface of the sample changes due to erosion and the like, and the rate of atomic gas dissociation decreases. To deal with this situation, one may consider to continue laser light irradiation by changing the radiation position of the ablation laser light, but such would not solve the problem related to continuity.

### Drawback 2:

In the device described in US 2020/0335320 A, in principle, introduction of the ablation laser light and ejection of the atomic gas are carried out through the same opening. For this reason, there is difficulty in adopting a mechanism for efficiently collimating the atomic gas. One may consider to eject the atomic gas from an end face opposite to the end face from which the ablation laser light is introduced, but even in that case, it is difficult to prevent the ablation laser light from leaking into a subsequent device to which the atomic beam travels.

In contrast, the atomic beam generator 700 according to the seventh embodiment overcomes the above-described Drawbacks 1 and 2.

That is, as to Drawback 1, in the seventh embodiment, the laser light is radiated onto the heated element 708, and is not directly radiated onto the sample 714. Accordingly, changes in the surface of the sample 714 do not affect the heat conversion efficiency of the heated element 708, and the heat conversion efficiency can be maintained.

As to Drawback 2, in the seventh embodiment, since the position of laser light 718 radiation and the position of atomic beam emission are separate from each other, by setting the diameter DL of the laser light 718 to be less than the diameter DH of the sample reservoir 704, the laser light 718 can be prevented from traveling to a subsequent device . Further, a nozzle for collimating the atomic beam can be easily adopted.

Moreover, in the seventh embodiment, thermal insulation of the sample reservoir 704 can be easily enhanced, and the heated element 708 has a high thermal efficiency. Therefore, atomic vapor can be generated from the sample 714 without using a high-power laser light as the laser light 718. For example, a medium-power laser light may be used.

According to the atomic beam generators of the respective embodiments described above, energy can be wirelessly transferred from a wireless power transfer means (e.g., an induction coil or a light source) installed in atmosphere to a heated element installed in vacuum. Therefore, there is no need to provide a hermetically sealed terminal. By eliminating a hermetically sealed module, an atomic beam generator can be made smaller.

Further, by providing a heated element, an object installed in vacuum can be heated locally. For example, heating can be performed limitedly in only components that are desired to be heated, such as the nozzle and the sample. Further, by providing a thermal insulation member, heat generating parts (e.g., the heated element, the nozzle, the sample reservoir, and the like) can be isolated, and thermal insulation performance can be improved. Furthermore, since localized heating is possible, the surface area of heated parts is reduced, and as a result, gas release can be suppressed and the vacuum characteristic can be improved.

According to conventional technology in which a wired power transfer means is used to heat a sample, in principle, the body of a physics package and an atomic beam generator must be connected by at least two elements; namely, a structural support member and electrical wiring. Considering convenience of loading and unloading samples, in the conventional technology, it is preferable to provide a flange that can be removed from the vacuum chamber of the physics package, and to mount the structure of the atomic beam generator on this flange. In other words, it is preferable to provide, on the physics package, at least one flange dedicated to the atomic beam generator.

In contrast, in the atomic beam generators according to the embodiments, a wireless power transfer means is used, so that electrical wiring required in the conventional technology is unnecessary. Therefore, even when convenience of loading and unloading samples is taken into consideration, it is sufficient to use a structure for inserting a structural support member and a sample through a flange provided on a device located subsequent modules of the atomic beam generator. In other words, it is not absolutely necessary to provide a flange dedicated to the atomic beam generator. Consequently, the atomic beam generator and the physics package can be made smaller.

Further, in the embodiments, since the sample is heated using a ferromagnetic material, the finally reached temperature can be managed using the Curie temperature of the ferromagnetic material. There is no need for a temperature sensor, and size reduction of the atomic beam generator can be achieved to that extent. Furthermore, since there is an upper limit on the temperature, highly reliable temperature management can be achieved even upon occurrence of a malfunction regarding temperature control. Here, it is possible to provide a window that transmits infrared light, and the temperature of the sample may be measured by measuring infrared light.

In the above description, an optical lattice clock has been referred to as an example. However, for those skilled in the art, the techniques of the respective embodiments can be applied to devices other than optical lattice clocks. Specifically, the techniques of the embodiments can also be applied to atomic clocks other than optical lattice clocks, or atomic interferometers, which are interferometers that use atoms. For example, it is possible to construct a physics package for an atomic clock or a physics package for an atomic interferometer, which includes an atomic beam generator and a vacuum chamber according to an embodiment. Further, the present embodiments are also applicable to various quantum information processing devices based on atoms or ionized atoms. A quantum information processing device refers to a device that performs measurement, sensing, and information processing by using the quantum state of atoms or light, and examples thereof include, in addition to an atomic clock and an atomic interferometer, a ferromagnetic field meter, an electric field meter, a quantum computer, a quantum simulator, and a quantum repeater. In a physics package for a quantum information processing device, by using the technology of the embodiments, size reduction or portability can be achieved as in a physics package for an optical lattice clock. It should be noted that in such a device, a clock transition space may not be a space intended for measuring time, but may rather be treated simply as a space for performing clock transition spectroscopy.

In the above description, specific configurations have been shown in order to facilitate understanding. However, those configurations only show example embodiments, and various other embodiments are possible.

### REFERENCE SIGNS LIST

100 atomic beam generator, 102 vacuum chamber, 104 sample reservoir, 106 nozzle, 108 heated element, 110 lid, 112 thermal insulation member, 114 induction coil, 118 sample.

## Claims

1. An atomic beam generator, comprising:
a vacuum chamber;
a wireless transfer means installed outside the vacuum chamber and configured to supply energy wirelessly;
a sample reservoir installed inside the vacuum chamber and configured to contain an atom source;
a heated element installed inside the vacuum chamber and configured to be heated by energy supplied from the wireless transfer means so as to heat the atom source; and
a nozzle installed on the sample reservoir and configured to eject from the sample reservoir an atomic vapor generated by heating the atom source.

2. The atomic beam generator according to claim 1, wherein
the heated element is a ferromagnetic material, and
the wireless transfer means wirelessly transfers electromagnetic power to the heated element.

3. The atomic beam generator according to claim 2, wherein
the heated element is a ferromagnetic material having a Curie temperature specified based on a target sublimation temperature of the atom source.

4. The atomic beam generator according to claim 1, wherein
the heated element is a high-frequency resistor, and
the wireless transfer means wirelessly transfers electromagnetic power to the heated element.

5. The atomic beam generator according to claim 1, wherein
the heated element is a resistor included in an LC resonator, and
the wireless transfer means wirelessly transfers electromagnetic power to the heated element.

6. The atomic beam generator according to claim 1, further comprising
a thermal insulation member that blocks thermal transfer path from the sample reservoir.

7. The atomic beam generator according to claim 6, wherein
the thermal insulation member has a cylindrical shape, and is provided on the sample reservoir on a side toward the nozzle, and
the atomic beam ejected from the nozzle travels by passing through the thermal insulation member.

8. The atomic beam generator according to claim 7, wherein
the sample reservoir and the thermal insulation member are formed into one unit and inserted into the vacuum chamber to be installed therein.

9. The atomic beam generator according to claim 6, comprising
a plurality of thermal insulation members, wherein
each of the thermal insulation members is a rod-shaped member, and the thermal insulation members are installed to surround the sample reservoir while being spaced apart from each other.

10. The atomic beam generator according to claim 1, wherein
the wireless transfer means is an induction coil.

11. The atomic beam generator according to claim 1, wherein
the heated element is installed to surround the nozzle.

12. The atomic beam generator according to claim 1, wherein
the heated element is a member that converts light into heat, and
the wireless transfer means irradiates light toward the heated element.

13. The atomic beam generator according to claim 12, wherein
the heated element is installed at an end face of the sample reservoir opposite to an end face at which the nozzle is installed, and
a size of the sample reservoir is greater than a diameter of light radiated onto the heated element.

14. A physics package, comprising:
the atomic beam generator according to any one of claims 1 to 13, and
a vacuum chamber that encloses a clock transition space where atoms are placed.

15. A physics package for an optical lattice clock, comprising
the physics package according to claim 14.

16. A physics package for an atomic clock, comprising
the physics package according to claim 14.

17. A physics package for an atomic interferometer, comprising
the physics package according to claim 14.

18. A physics package for a quantum information processing device based on atoms or ionized atoms, comprising
the physics package according to claim 14.

19. A physics package system, comprising:
the physics package according to claim 14; and
a control apparatus configured to control operation of the physics package.
